(19) **Europäisches Patentamt**
**European Patent Office**
**Office européen des brevets**

(11) **EP 3 410 619 B1**

(12) **EUROPEAN PATENT SPECIFICATION**

(45) Date of publication and mention
of the grant of the patent:
**29.03.2023 Bulletin 2023/13**

(21) Application number: **16888090.4**

(22) Date of filing: **01.11.2016**

(51) International Patent Classification (IPC):
***H04L 1/00*** *(2006.01)* ***H04L 27/00*** *(2006.01)*
***H04J 99/00*** *(2009.01)*

(52) Cooperative Patent Classification (CPC):
**H04L 1/00; H04L 1/0016; H04L 1/0026;**
**H04L 27/00**

(86) International application number:
**PCT/JP2016/082492**

(87) International publication number:
**WO 2017/130505 (03.08.2017 Gazette 2017/31)**

(54) **DEVICE, METHOD AND PROGRAM**

VORRICHTUNG, VERFAHREN UND PROGRAMM

DISPOSITIF, PROCÉDÉ, ET PROGRAMME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.01.2016 JP 2016013281**

(43) Date of publication of application:
**05.12.2018 Bulletin 2018/49**

(73) Proprietor: **Sony Group Corporation**
**Tokyo 108-0075 (JP)**

(72) Inventors:
• **TANG, Yifu**
**Tokyo 108-0075 (JP)**
• **KIMURA, Ryota**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**WO-A1-2007/020994 WO-A1-2010/082319**
**JP-A- 2008 211 752**

• **LG ELECTRONICS: "Discussion about UCI
transmission enhancement", 3GPP DRAFT;
R1-112482-LG_UCI TRANSMISSION
ENHANCEMENT(FINAL), 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Athens,
Greece; 20110822, 16 August 2011 (2011-08-16),
XP050537571,**
• **INTEL CORPORATION: "CQI/MCS/TBS Tables for
256QAM and Relevant Signaling", 3GPP DRAFT;
R1-140118 INTEL -
256QAM_TABLES_SIGNALING - COPY, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Prague,
Czech Republic; 20140210 - 20140214 9 February
2014 (2014-02-09), XP050735682, Retrieved from
the Internet:
URL:http://www.3gpp.org/ftp/Meetings_3GPP_
SYNC/RAN/RAN1/Docs/ [retrieved on 2014-02-09]**

**(Cont. next page)**

- MEDIATEK INC: "CSI definition for Rel-13 MTC", 3GPP DRAFT; R1-157386 CSI DEFINITION FOR REL-13 MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051003570, Retrieved from the Internet: URL:http://www.3gpp.org/ftp/Meetings_3GPP_ SYNC/RAN1/Docs/ [retrieved on 2015-11-15]
- "3 rd Generation Partnership Project; Technical Specification Group Radio Access Network; Evolved Universal Terrestrial Radio Access (E-UTRA); Multiplexing and channel coding (Release 11)", 3GPP DRAFT; DRAFT36212-B60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 22 September 2015 (2015-09-22), XP051021011, Retrieved from the Internet: URL:http://www.3gpp.org/ftp/tsg_ran/WG1_RL 1/DRAFT/ [retrieved on 2015-09-22]
- NOKIA: 'Multiplexing and channel coding for HSDPA' 3GPP TSG-RAN WG1#21 R1-01-0828 28 August 2001, XP050095111
- INTEL CORPORATION: 'CQI/MCS/TBS Tables for 256QAM and Relevant Signaling' 3GPP TSG-RAN WG1#76 R1-140118 09 February 2014, XP050735682

**Description**

Technical Field

The present disclosure relates to an apparatus, a method, and a program.

Background Art

For a cellular system, fifth-generation systems are being investigated for the purpose of realizing a ubiquitous network. In order to realize transition from the fourth generation to the fifth generation, some breakthroughs (for example, improvements in both spectrum efficiency and energy efficiency, advanced radio frequency domain processing, and the like) are required.

In terms of improving spectral efficiency, a multiple access technology (MAT) is an important element. As one of multiple access technologies, non-orthogonal multiple access (NOMA), such as interleave division multiple access (IDMA), has been attracting attention. Regarding IDMA, technologies related to interleaver allocation have been developed for the purpose of distinguishing between different users and effectively eliminating interference between the users to improve communication capability. For example, PTL 1 below discloses a technology of using different interleave patterns for different users or different cells to improve communication capability.

In addition, the Internet of Things (IoT) and big data have attracted attention as technologies related to the upcoming fifth generation in recent years. The IoT indicates a technology of mounting sensors, processing circuits, communication functions, and the like on a variety of objects existing in the actual world, and causing them to connect to the Internet or communicate with each other. Big data is data or a technology related to data characterized by huge amounts of data and is a technology related to data that is present together in various forms and data that has real time properties. There is a possibility that the IoT and big data will be related in the future. For example, because the amount of data that is collected and exchanged by objects in IoT has rapidly increased and the data has become diverse, it can be handled as the big data. As an objective technology of big data, there is small data that is a specific type of data collected on the basis of a specific purpose. Small data is data that includes specific attributes such as locations, air temperatures, sizes, sound volumes, and the like and delivers current states or conditions. Observers can know what is happening in real time from small data. In short, big data is for delivering reasons of motions of target objects while small data is for delivering current motions of the target objects. In a society of the IoT, it is assumed that there will be cases in which small data plays a more important role than big data depending on use purposes of data.

Citation List

Patent Literature

Patent Literature 1: JP 2004-194288A

LG ELECTRONICS, "Discussion about UCI transmission enhancement", 3GPP DRAFT; R1-112482-LGUCI TRANSMISSION ENHANCEMENT(FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20110816), vol. RAN WG1, no. Athens, Greece; 20110822, and
INTEL CORPORATION, "CQI/MCS/TBS Tables for 256QAM and Relevant Signaling", vol. RAN WG1, no. Prague, Czech Republic; 20140210 - 20140214, (20140209), 3GPP DRAFT; R1-140118 INTEL - 256QAM_TABLES_SIGNALING - COPY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN/RANI/Docs/, (20140209), disclose further prior art.

Disclosure of Invention

Technical Problem

IDMA provides a receiver with a simple configuration in which interference cancellation in units of bits is performed while robustness against phasing of code division multiple access (CDMA) is inherited. Further, according to IDMA, it is possible to perform interference cancellation between users, which occurs in a multiple-path environment. Generally, the interference cancellation in IDMA is performed by a successive interference canceller (SIC). For example, signals transmitted at an extremely low coding rate by using a repetition code in an IDMA system can achieve a satisfactory error rate (for example, a bit error rate (BER) or a block error rate (BLER)) by the interference between the users being cancelled by an application of an SIC on a reception side.

However, an application of more robust error correction code, such as a turbo code, instead of the repetition code is required by an actual communication system such as an orthogonal frequency-division multiplexing (OFDM)-IDMA system. In addition, a high-order modulation scheme such as 16 quadrature amplitude modulation (16QAM) or 64QAM is defined in 3GPP, and in a case in which these modulation schemes are employed, the coding rate increases. However, a signal on which the high-order modulation has been performed, which has been transmitted at the high coding rate, cannot completely cancel user interference depending on the application of an SIC on the reception side and cannot achieve a satisfactory error rate in some cases.

Thus, it is desirable to provide a transmission technology capable of achieving a satisfactory error rate on the reception side even in a case in which high-order modulation is performed.

Solution to Problem

According to the present disclosure, there are provided an apparatus and a corresponding method according to the appended claims. Further embodiments are disclosed in the dependent claims.

Advantageous Effects of Invention

According to the present disclosure, it is possible to achieve a satisfactory error rate on the reception side even in a case in which high-order modulation is performed as described above. Note that the effects described above are not necessarily limitative. With or in the place of the above effects, there may be achieved any one of the effects described in this specification or other effects that may be grasped from this specification.

Brief Description of Drawings

[FIG. 1] FIG. 1 is an explanatory diagram for describing a technology related to IDMA.
[FIG. 2] FIG. 2 is an explanatory diagram for describing a technology related to IDMA.
[FIG. 3] FIG. 3 is an explanatory diagram for describing a technology related to IDMA.
[FIG. 4] FIG. 4 is an explanatory diagram for describing a technology related to IDMA.
[FIG. 5] FIG. 5 is an explanatory diagram for describing a simulation environment.
[FIG. 6] FIG. 6 is a view illustrating an example of the entire configuration of a communication system according to an embodiment of the present disclosure.
[FIG. 7] FIG. 7 is a block diagram illustrating an example of a configuration of a base station according to an embodiment.
[FIG. 8] FIG. 8 is a block diagram illustrating an example of a configuration of a terminal apparatus according to an embodiment.
[FIG. 9] FIG. 9 is an explanatory diagram for describing an outline of transmission processing performed by the base station according to an embodiment.
[FIG. 10] FIG. 10 is an explanatory diagram for describing an outline of the transmission processing according to an embodiment.
[FIG. 11] FIG. 11 is an explanatory diagram for describing an outline of the transmission processing according to an embodiment.
[FIG. 12] FIG. 12 is an explanatory diagram for describing an outline of the transmission processing according to an embodiment.
[FIG. 13] FIG. 13 is an explanatory diagram for describing an outline of the transmission processing according to an embodiment.
[FIG. 14] FIG. 14 is an explanatory diagram for describing an outline of the transmission processing according to an embodiment.
[FIG. 15] FIG. 15 is an explanatory diagram for describing an outline of the reception processing according to an embodiment.
[FIG. 16] FIG. 16 is an explanatory diagram for describing an outline of the reception processing according to an embodiment.
[FIG. 17] FIG. 17 is an explanatory diagram for description related to a new coding rate according to an embodiment.
[FIG. 18] FIG. 18 is an explanatory diagram for description related to a new coding rate according to an embodiment.
[FIG. 19] FIG. 19 is an explanatory diagram for description related to a new coding rate according to an embodiment.
[FIG. 20] FIG. 20 is an explanatory diagram for description related to a new coding rate according to an embodiment.
[FIG. 21] FIG. 21 is an explanatory diagram for description related to a new coding rate according to an embodiment.

[FIG. 22] FIG. 22 is an explanatory diagram for description related to a new coding rate according to an embodiment.
[FIG. 23] FIG. 23 is an explanatory diagram for description related to a new coding rate according to an embodiment.
[FIG. 24] FIG. 24 is an explanatory diagram for description related to a new coding rate according to an embodiment.
[FIG. 25] FIG. 25 is an explanatory diagram for description related to a new coding rate according to an embodiment.
[FIG. 26] FIG. 26 is an explanatory diagram for description related to a new coding rate according to an embodiment.
[FIG. 27] FIG. 27 is an explanatory diagram for description related to a new coding rate according to an embodiment.
[FIG. 28] FIG. 28 is an explanatory diagram for description related to a new coding rate according to an embodiment.
[FIG. 29] FIG. 29 is an explanatory diagram for description related to data size decision processing according to an embodiment.
[FIG. 30] FIG. 30 is an explanatory diagram for description related to data size decision processing according to an embodiment.
[FIG. 31] FIG. 31 is an explanatory diagram for description related to data size decision processing according to an embodiment.
[FIG. 32] FIG. 32 is an explanatory diagram for description related to data size decision processing according to an embodiment.
[FIG. 33] FIG. 33 is a block diagram illustrating a first example of a schematic configuration of an eNB.
[FIG. 34] FIG. 34 is a block diagram illustrating a second example of a schematic configuration of an eNB.
[FIG. 35] FIG. 35 is a block diagram illustrating an example of a schematic configuration of a smartphone.
[FIG. 36] FIG. 36 is a block diagram illustrating an example of a schematic configuration of a car navigation apparatus.

Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.
Note that description will be given in the following order.

1. Introduction

1.1. IDMA
1.2. Simulation environment

2. Configuration example

2.1. Configuration example of system
2.2. Configuration example of base station
2.3. Configuration of terminal apparatus

3. Technical features

3.1. Outline of transmission processing
3.2. Outline of reception processing
3.3. Introduction of new coding rate
3.4. Reduction in data size

4. Application examples
5. Conclusion

«1. Introduction»

<1.1. IDMA>

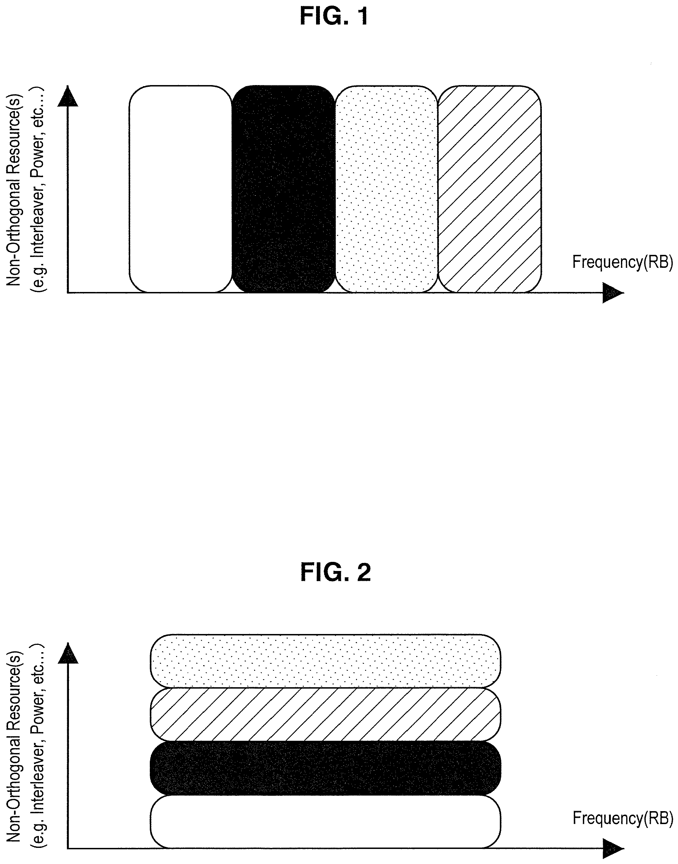

First, technologies related to IDMA are described with reference to FIGS. 1 to 4. FIGS. 1 to 4 are explanatory diagrams for describing the technologies related to IDMA.
Non-orthogonal multiple access has been attracting attention as one of 5G radio access technologies following long term evolution (LTE)/LTE-advanced (LTE-A).
In orthogonal frequency division multiple access (OFDMA) or single-carrier FDMA (SC-FDMA) adopted in LTE, radio resources are allocated so as not to overlap between user terminals within a cell. Note that radio resources are resources of frequency or time for radio communication, which include various types such as a resource block, a subframe, and a resource element. Such a radio access technology of allocating radio resources so that they do not overlap is also called orthogonal multiple access.

Here, FIG. 1 illustrates an example of allocation of radio resources in orthogonal multiple access. In FIG. 1, the horizontal axis indicates frequency, and radio resources allocated to different users are shown by different colors. As illustrated in FIG. 1, resource blocks (RBs) different in the frequency direction, for example, can be allocated to users in orthogonal multiple access.

In contrast, in non-orthogonal multiple access, at least partly overlapping radio resources are allocated to user terminals within a cell. In the case where non-orthogonal multiple access is adopted, signals transmitted and received by user terminals within a cell can interfere with each other in a wireless space. The receiving side, however, is able to acquire information for each user through predetermined decoding processing. It is theoretically known that non-orthogonal multiple access achieves higher communication capability (or cell communication capability) than orthogonal multiple access when the allocation of radio resources is performed appropriately.

Here, FIG. 2 illustrates an example of allocation of radio resources in non-orthogonal multiple access. In FIG. 2, the horizontal axis indicates frequency, and radio resources allocated to different users are shown by different colors. As illustrated in FIG. 2, resource blocks overlapping in the frequency direction, for example, can be allocated to users in non-orthogonal multiple access.

IDMA is one of radio access technologies categorized as non-orthogonal multiple access. In IDMA, to identify user signals, different interleave patterns, which are used for interleave processing that a transmitting-side apparatus performs on transmission signals, are allocated to different users. A receiving-side apparatus decodes user signals separately by using de-interleave patterns corresponding to the interleave patterns allocated to the respective users. An advantage of IDMA is a light load of signal processing by the transmitting-side apparatus. This advantage is particularly emphasized in uplink (UL) from a user terminal to a base station.

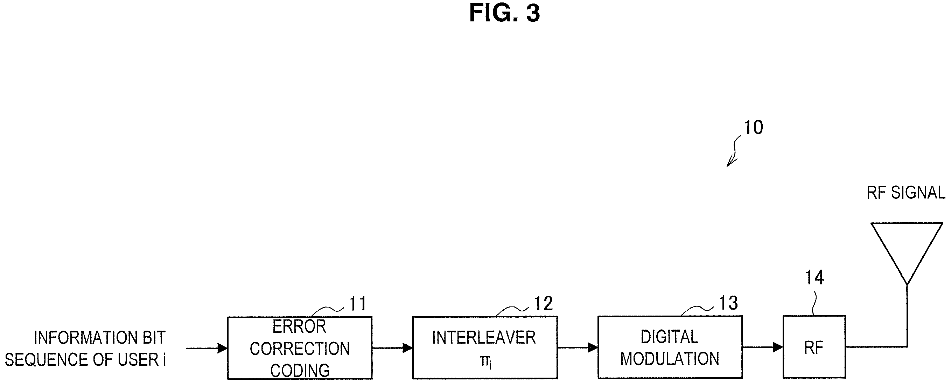

Here, FIG. 3 illustrates a basic example configuration of a transmitting station 10 that performs radio communication using IDMA. As illustrated in FIG. 3, the transmitting station 10 includes an error correction encoding circuit 11, an interleaver ($\pi_i$) 12, a digital modulation circuit 13, and a radio frequency (RF) circuit 14. The error correction encoding circuit 11 performs error appropriate encoding on an information bit string of a user i. The interleaver ($\pi_i$) 12, which is an interleaver allocated for the user i, performs interleave processing on the information bit string that has been subjected to error correction encoding. The digital modulation circuit 13 digitally modulates the information bit string that has gone through interleave processing. The RF circuit 14 performs various kinds of signal processing on a signal after digital modulation, and transmits a radio signal via an antenna. Note that interleaver allocation is performed by allocating at least one of an interleaver type and an interleave pattern.

An interleaver type, which means a type of interleaver, is a policy of an interleave pattern used by an interleaver. Correlation characteristics are maintained between interleave patterns of the same interleaver type. In contrast, correlation characteristics are unknown between interleave patterns of different interleaver types. Therefore, it is preferred to allocate different interleave patterns of the same interleaver type for users between which interference can occur.

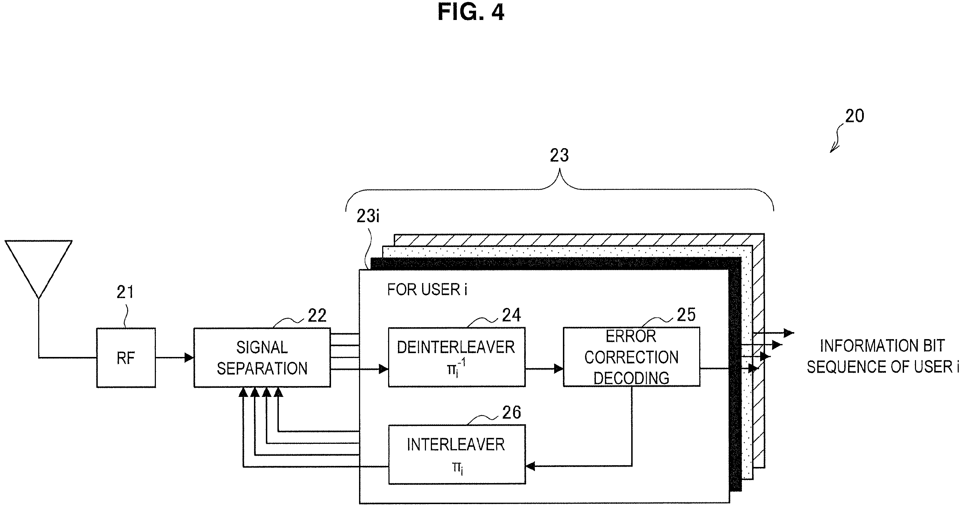

FIG. 4 illustrates a basic example configuration of a receiving station 20 that performs radio communication using IDMA. As illustrated in FIG. 4, the receiving station 20 includes an RF circuit 21, a signal separation circuit 22, and decoding circuits 23. The RF circuit 21 performs various kinds of signal processing on a radio signal received by an antenna, and outputs the resulting signal to the signal separation circuit 22. The signal separation circuit 22 has a function of separating a composite signal, in which signals from users are combined, into signals for the respective users, and outputs each user signal obtained by the separation to the corresponding decoding circuit 23. For example, the decoding circuit 23i includes a de-interleaver ($\pi_i^{-1}$) 24 for a user i, an error correction decoding circuit 25, and an interleaver ($\pi_i$) 26 for the user i. The decoding circuit 23i, to which a user signal from the user i is input, performs de-interleave processing by the de-interleaver ($\pi_i^{-1}$) 24 and decoding by the error correction decoding circuit 25. The decoding circuit 23i outputs the decoded signal as an information bit string of the user i when decoding has been performed correctly. In addition, the decoding circuit 23i performs interleave processing by the interleaver ($\pi_i$) 26 on the decoded signal, and returns the resulting signal as a user signal for the user i to the signal separation circuit 22. Such returning of a user signal is performed for all the user signals. The signal separation circuit 22 performs signal separation again using returned user signals, and outputs user signals after the separation to the decoding circuits 23 again. The receiving station 20 repeats the signal processing by the signal separation circuit 22 and the decoding circuits 23, thereby decoding user signals. Note that loglikelihood ratios (LLRs) may be calculated for the respective user signals and may be used as references for ending repetition. Such decoding of user signals from a multiple signal is also called multi user detection below.

<1.2. Simulation environment>

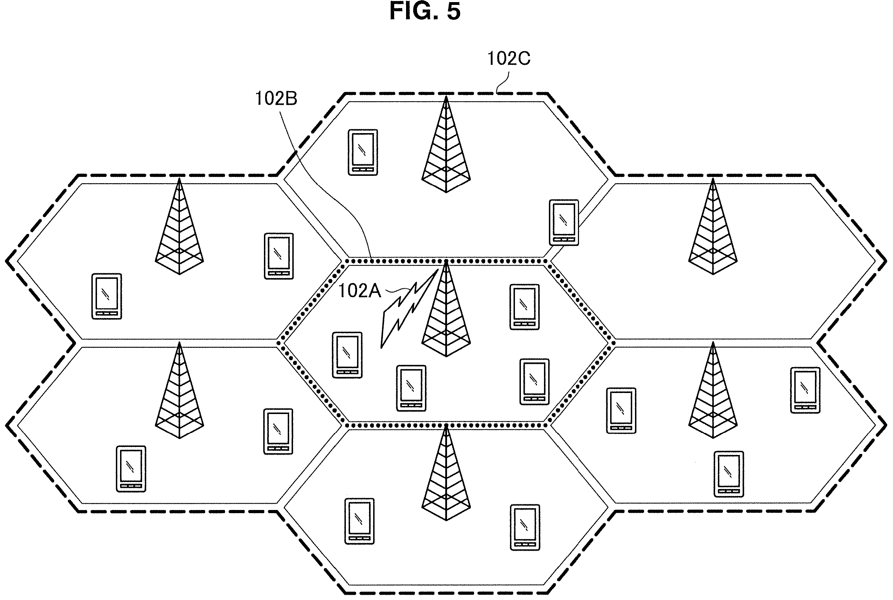

In order to evaluate spectrum efficiency and communication quality of a cellular system, a simulator of the cellular system is effective. Thus, results of simulation conducted for verifying effectiveness of this technology will be described later in this specification. Hereinafter, a simulation environment used will be described with reference to FIG. 5.

FIG. 5 is an explanatory diagram for describing the simulation environment. As illustrated in FIG. 5, the cellular system includes a plurality of terminal apparatuses and base stations. Generally, the cellular system is divided into three layers, namely a physical (PHY) layer 102A, a multi access control (MAC) layer 102B, and a radio resource control (RRC) layer 102C in terms of performance evaluation. In the PHY layer 102A, link transmission quality, particularly, a BER/BLER for each link between a base station and a terminal apparatus, is evaluated. In the MAC layer 102B, throughputs of all the terminal apparatuses in a cell provided by a base station are evaluated. In the RRC layer 102C, results of radio resource control for suppressing interference in the plurality of cells provided by the plurality of base stations are evaluated.

In a simulation platform of the cellular system, complexity of calculation increases and a calculation time increases as the numbers of the base stations and the terminal apparatuses increase. Therefore, the simulation of the cellular system can be conducted by dividing it into link-level simulation (LLS) and system-level simulation (SLS). As the LLS, simulation performed by focusing on evaluation in the PHY layer can be performed. The LLS can be used for channel estimation, a multi-input-multi-output (MIMO) algorithm, adaptive modulation/demodulation, a cyclic redundancy check (CRC) algorithm, or transmission modeling, for example. As the SLS, simulation performed by focusing on the MAC layer and the RRC layer can be performed. The SLS can be used for frequency resource control, scheduling, mobility management, or system throughput evaluation, for example.

It is assumed that the LLS is used in this specification. This is because this technology introduces a new channel quality indicator (CQI) table that corresponds to a CQI table standardized in 3GPP by focusing on small data communication.

«2. Configuration example»

<2.1. Configuration example of system>

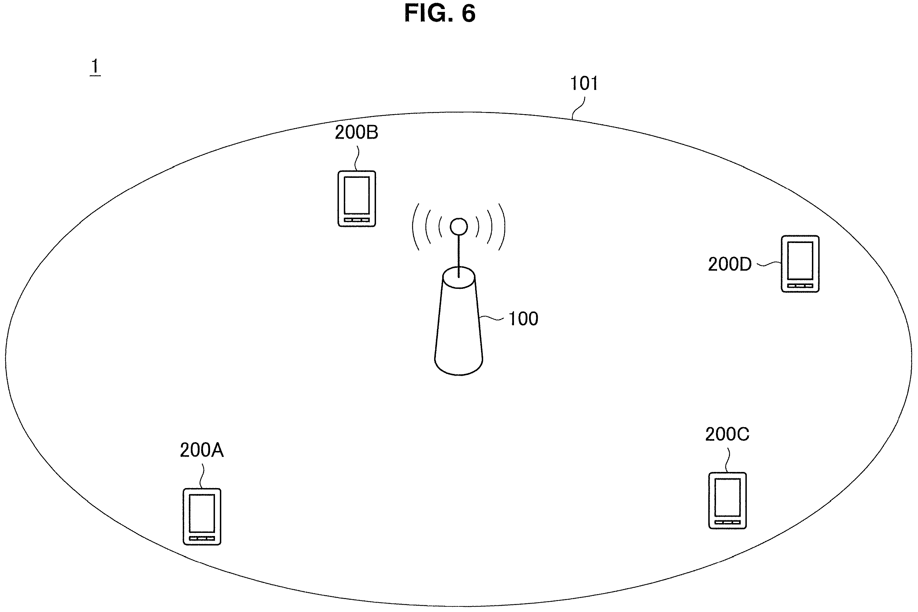

Next, a schematic configuration of a system 1 according to an embodiment of the present disclosure will be described with reference to FIG. 6. FIG. 6 is an explanatory diagram illustrating an example of a schematic configuration of the system 1 according to the embodiment of the present disclosure. Referring to FIG. 6, the system 1 includes a base station 100 and terminal apparatuses 200. Here, the terminal apparatuses 200 are also called users. The users can be called user equipment (UE). The UE described herein may be UE that is defined in LTE or LTE-A or may more generally mean communication equipment.

(1) Base station 100

The base station 100 is a base station of a cellular system (or a moving body communication system). The base station 100 performs radio communication with terminal apparatuses (for example, the terminal apparatuses 200) located in a cell 101 of the base station 100. For example, the base station 100 transmits downlink signals to the terminal apparatuses and receives uplink signals from the terminal apparatuses.

(2) Terminal apparatuses 200

The terminal apparatuses 200 can perform communication in the cellular system (or the moving body communication system). The terminal apparatuses 200 perform radio communication with the base station (for example, the base station 100) of the cellular system. For example, the terminal apparatuses 200 receive the downlink signal from the base station and transmit the uplink signal to the base station.

(3) Multiplexed/multiple-access connection

According to an embodiment of the present disclosure, in particular, the base station 100 performs radio communication with a plurality of terminal apparatuses through orthogonal multiple-access connection/non-orthogonal multiple-access connection. More specifically, the base station 100 performs radio communication with the plurality of terminal apparatuses 200 through multiplexed/multiple-access connection using IDMA.

For example, the base station 100 performs radio communication with the plurality of terminal apparatuses 200 through multiplexed/multiple-access connection using IDMA in the downlink. More specifically, the base station 100 multiplexes signals to the plurality of terminal apparatuses 200 by using IDMA, for example. In this case, the terminal apparatuses 200 cancel one or more other signals as interference from multiplexed signals including desired signals (that is, signals to the terminal apparatuses 200) and decode the desired signals.

Note that the base station 100 may perform radio communication with the plurality of terminal apparatuses 200 through multiplexed/multiple-access connection using IDMA in the uplink instead of or along with the downlink. In this case, the base station 100 may decode the respective signals from multiplexed signals including signals transmitted by the plurality of terminal apparatuses.

(4) Supplementary note

This technology can be applied to a multiple-cell system such as a heterogeneous network (HetNet) or small cell enhancement (SCE). In addition, this technology can be applied to an MTC apparatus, an IoT apparatus, or the like.

<2.2. Configuration example of base station>

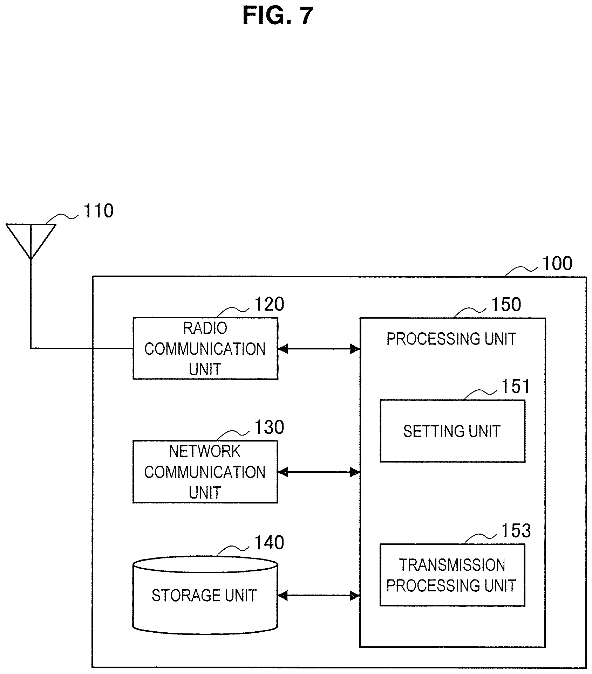

Next, an example of a configuration of the base station 100 according to an embodiment of the present disclosure will be described with reference to FIG. 7. FIG. 7 is a block diagram illustrating an example of the configuration of the base station 100 according to the embodiment of the present disclosure. Referring to FIG. 7, the base station 100 includes an antenna unit 110, a radio communication unit 120, a network communication unit 130, a storage unit 140, and a processing unit 150.

(1) Antenna unit 110

The antenna unit 110 radiates a signal output by the radio communication unit 120 as electric waves into a space. In addition, the antenna unit 110 transforms the electric waves in the space into a signal and outputs the signal to the radio communication unit 120.

(2) Radio communication unit 120

The radio communication unit 120 transmits and receives signals. For example, the radio communication unit 120 transmits downlink signals to the terminal apparatuses and receives uplink signals from the terminal apparatuses.

(3) Network communication unit 130

The network communication unit 130 transmits and receives information. For example, the network communication unit 130 transmits information to another node and receives information from another node. For example, another node described above includes another base station and a core network node.

(4) Storage unit 140

The storage unit 140 temporarily or permanently stores programs and a variety of data for operations of the base station 100.

(5) Processing unit 150

The processing unit 150 provides a variety of functions of the base station 100. The processing unit 150 includes a setting unit 151 and a transmission processing unit 153. Note that the processing unit 150 can include components other than these components. That is, the processing unit 150 can perform operations other than operations of these components.

Operations of the setting unit 151 and the transmission processing unit 153 will be described later in detail.

<2.3. Configuration of terminal apparatus>

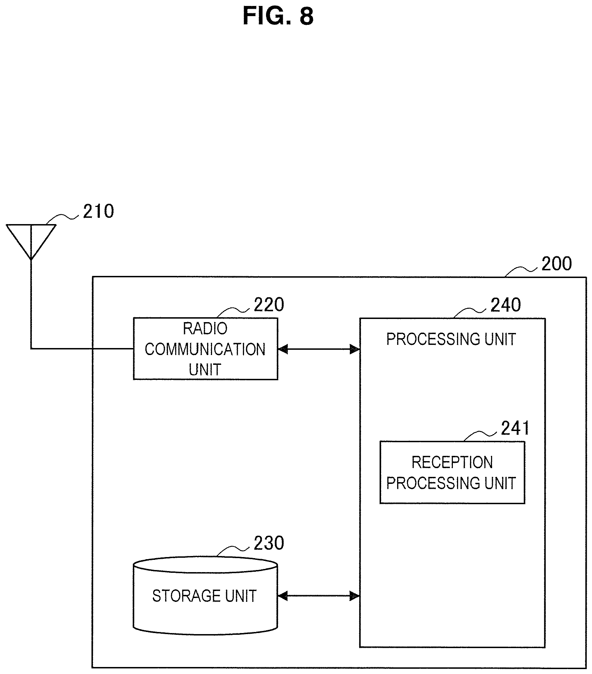

First, an example of a configuration of a terminal apparatus 200 according to an embodiment of the present disclosure will be described with reference to FIG. 8. FIG. 8 is a block diagram illustrating an example of the configuration of the terminal apparatus 200 according to the embodiment of the present disclosure. Referring to FIG. 8, the terminal apparatus 200 includes an antenna unit 210, a radio communication unit 220, a storage unit 230, and a processing unit 240.

(1) Antenna unit 210

The antenna unit 210 radiates a signal output by the radio communication unit 220 as electric waves into the space. In addition, the antenna unit 210 transforms the electric waves in the space into a signal and outputs the signal to the radio communication unit 220.

(2) Radio communication unit 220

The radio communication unit 220 transmits and receives signals. For example, the radio communication unit 220 receives a downlink signal from the base station and transmits an uplink signal to the base station.

(3) Storage unit 230

The storage unit 230 temporarily or permanently stores programs and a variety of data for operations of the terminal apparatus 200.

(4) Processing unit 240

The processing unit 240 provides a variety of functions of the terminal apparatus 200. The processing unit 240 includes a reception processing unit 241. Note that the processing unit 240 can further include components other than this component. That is, the processing unit 240 can perform operations other than operations of this component.
The operations of the reception processing unit 241 will be described later in detail.

«3. Technical features»

Hereinafter, technical features of the system 1 according to the embodiment will be described on the assumption that the base station 100 functions as a transmission apparatus and the terminal apparatuses 200 function as reception apparatuses. It is a matter of course that the terminal apparatus 200 may function as the transmission apparatus while the base station 100 may function as a reception apparatus or that the respective terminal apparatuses 200 may function as a transmission apparatus or a reception apparatus in D2D communication between the terminal apparatuses 200.

<3.1. Outline of transmission processing>

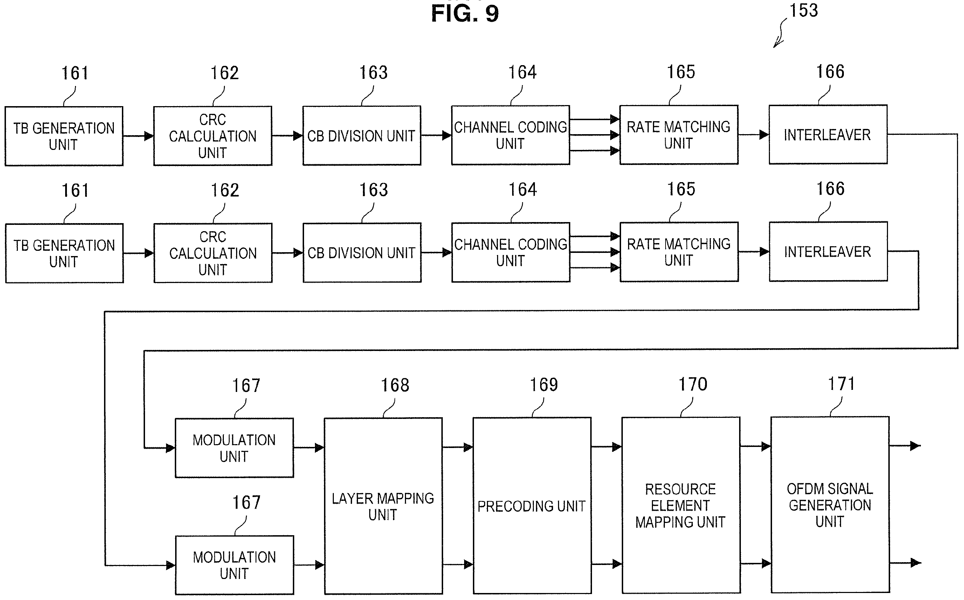

First, an outline of transmission processing performed by the base station 100 (for example, the transmission processing unit 153) will be described with reference to FIGS. 9 to 14.
FIG. 9 is an explanatory diagram for describing functional blocks related to transmission processing performed by the base station 100 according to the embodiment. As illustrated in FIG. 9, the transmission processing unit 153 according to the embodiment includes a TB generation unit 161, a CRC calculation unit 162, a CB division unit 163, a channel coding unit 164, a rate matching unit 165, an interleaver 166, a modulation unit 167, a layer mapping unit 168, a precoding unit 169, a resource element mapping unit 170, and an OFDM signal generation unit 171. Hereinafter, the respective functional blocks will be described in detail.

(1) TB generation unit 161

The TB generation unit 161 generates transport blocks (TBs). The TBs are a unit of data packets transmitted via a series of functional blocks in the PHY layer. The TB generation unit 161 calculates the maximum number of TBs in advance on the basis of a resource size on a physical downlink shared channel (PDSCH). Note that a maximum of two TBs can be transmitted at the same time in the current LTE. For example, the TB generation unit 161 acquires the fact that the number of TBs is two and generates two series. FIG. 9 illustrates a plurality of functional blocks that individually process these respective series.

(2) CRC calculation unit 162

The CRC calculation unit 162 has a function of calculating a CRC of the input series. In LTE, inspection using a CRC is performed in order to verify whether or not the transmitted series have been received correctly. Note that a BER/BLER is assumed to be calculated by buffering a transmission data packet and comparing a data packet decoded on the reception side with the buffered transmission data packet without enabling a CRC for simplification in the simulation.

(3) CB division unit 163

The CB division unit 163 has a function of generating code blocks (CBs) by dividing the input series. The CB division unit 163 divides the input series into CBs with such a size that the CBs can be input to an error correction encoder. For example, the maximum size of the series that can be input to an encoder of a turbo code that is used as an error correction code for communication path coding in LTE is 6144 bits. Thus, in a case in which the size of a TB exceeds 6144 bits, the CB division unit 163 divides the TB into CBs with such a size that the TB can be input to the turbo encoder. For the division, it is desirable that two references, namely a reference size of the CBs not exceeding 6144 bits and a reference number of CBs set to be as small as possible, be met. The CB division unit 163 adds the CRC calculated by the CRC calculation unit 162 to the CBs after the division into the CBs. Note that a BER/BLER in the simulation is calculated on the basis of the CBs after execution of decoding of the turbo code on the reception side.

(4) Channel coding unit 164

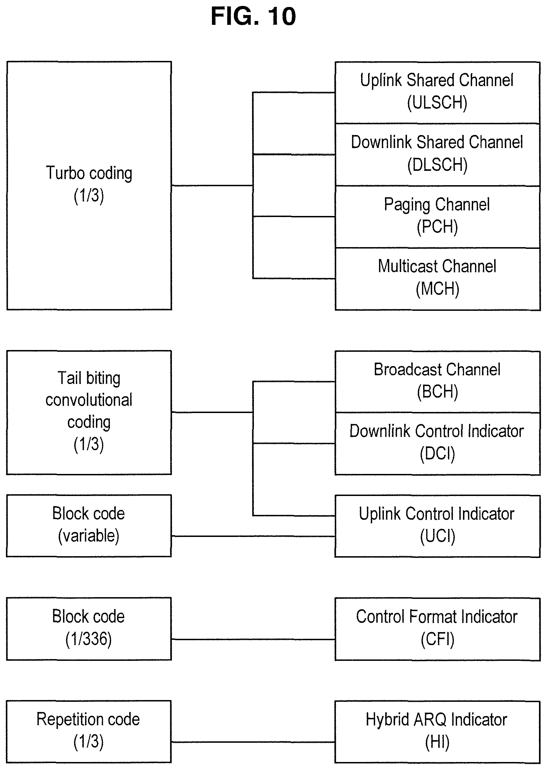

The channel coding unit 164 has a function of performing channel coding (that is, communication path coding) by applying the error correction code to the input series. As illustrated in FIG. 10, there are various coding schemes that can be used in the channel coding.

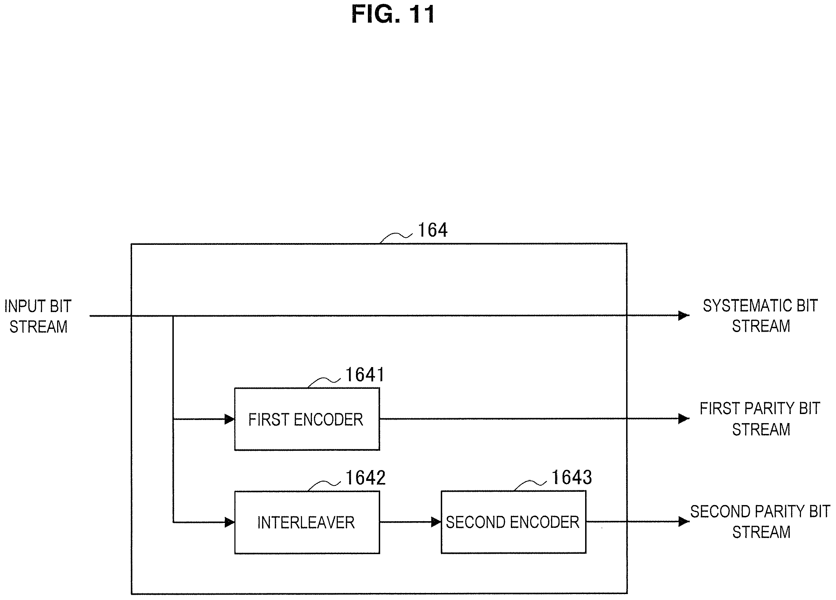

FIG. 10 is an explanatory diagram for describing coding schemes that are used for physical channels. As illustrated in FIG. 10, different codes can be used for the respective physical channels in LTE. For example, a turbo code (turbo coding) with a coding rate of 1/3 is used for an uplink shared channel (ULSCH), a downlink shared channel (DLSCH), a paging channel (PCH), and a multicast channel (MCH). In addition, a convolutional code (tail biting convolutional coding) with a coding rate of 1/3 is used for a broadcast channel (BCH), a downlink control channel (DCI), and a user control channel (UCI). However, both the convolutional code with the coding rate of 1/3 and a block code with a variable coding rate may be used for the UCI. In addition, a block code with a coding rate of 1/16 is used for a control format indicator (CFI). In addition, a repetition code with a coding rate of 1/3 is used for a hybrid automatic repeat request (ARQ) indicator (HI). Note that a parallel concatenated convolutional code (PCCC) with an input bit length (or a constraint length) restricted to 8 may be used for a turbo code used for the ULSCH and the DLSCH. Hereinafter, a turbo encoder included in the channel coding unit 164 will be described with reference to FIG. 11.
FIG. 11 is an explanatory diagram for describing an outline of the turbo encoder included in the channel coding unit 164. The turbo encoder includes a first encoder 1641, a second encoder 1643, and an interleaver 1642. An input bit stream is input to the first encoder 1641 with no change and is input to the second encoder 1643 after an application of the interleaver 1642. The application of the interleaver 1642 before the second encoder 1643 plays an important role in the turbo code. In LTE, quadratic permutation polynomials are defined for the turbo code. The turbo encoder 164 outputs three bit streams. The first bit stream output is an input bit stream with no change. Hereinafter, this bit stream will also be referred to as a systematic bit stream. The second bitstream output is a first parity bit stream output from the first encoder 1641. The third bit stream output is a second parity bit stream output from the second encoder 1643.

(5) Rate matching unit 165

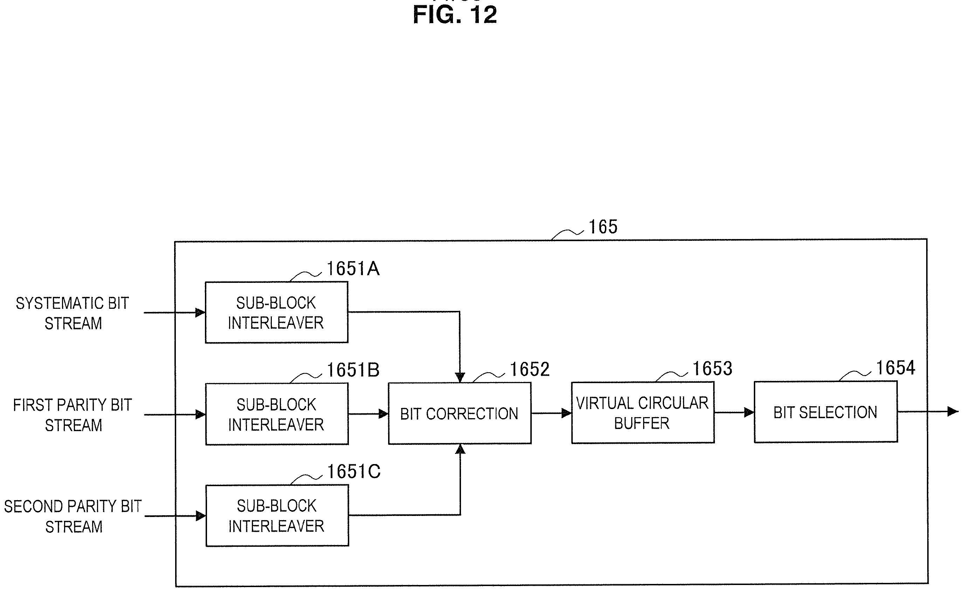

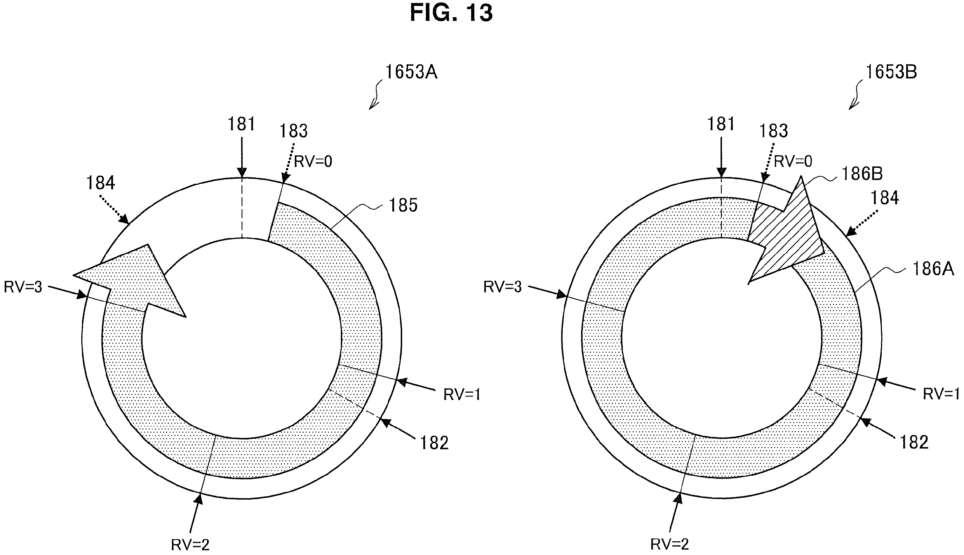

The rate matching unit 165 has a function of adjusting the number of bits of the coded series in accordance with the number of transmission bits. For example, the rate matching unit 165 adjusts the lengths of the three bit streams output from the turbo encoder of the channel coding unit 164 in accordance with the number of transmission bits. Hereinafter, an outline of processing performed by the rate matching unit 165 will be described with reference to FIG. 12.
FIG. 12 is an explanatory diagram for describing an outline of the rate matching processing. As illustrated in FIG. 12, the rate matching unit 165 applies sub-block interleavers 1651A to 1651C to the respective three input bit streams first. The sub-block interleaver 1651A randomizes the systematic bit stream, the sub-block interleaver 1651B randomizes the first parity bit stream, and the sub-block interleaver 1651C randomizes the second parity bit stream. Then, a bit correction 1652 links the three bit streams output from the sub-block interleavers 1651A to 1651C and buffers the three bit streams into a virtual circular buffer 1653. Finally, a bit selection 1654 selects bits from the virtual circular buffer 1653 and outputs a bit stream indicating a result of the selection. The output bit stream is also referred to as a code word (CW).
The rate matching unit 165 can operate in any of two operation modes, namely a puncturing mode or a repeating mode. Hereinafter, bit selection from the virtual circular buffer in each operation mode will be described with reference to FIG. 13.
FIG. 13 is an explanatory diagram for describing outlines of the puncturing mode and the repeating mode. FIG. 13 conceptually illustrates a buffer region (hereinafter, also referred to as a selected region) that is selected as an output bit stream by the bit selection from the virtual circular buffer that stores the systematic bit stream and the parity bit streams. A virtual circular buffer 1653A is a diagram illustrating the selected region in the puncturing mode while a virtual circular buffer 1653B is a diagram illustrating the selected region in the repeating mode. The region from the reference numeral 181 to the reference numeral 182 in the clockwise direction is a region in which the systematic bit stream is stored. In addition, the region from the reference numeral 182 to the reference numeral 181 in the clockwise direction is a region in which the parity bit streams are stored. The reference numeral 183 represents a position at which the bit selection for the CB that is to be transmitted starts first while the reference numeral 184 represents a position at which the bit selection is made to end. That is, data buffered from the reference numeral 183 to the reference numeral 184 is selected as the CW.

Referring to the selected region 185 in the virtual circular buffer 1653A, it is recognized that the selected region 185 in the puncturing mode is shorter than the virtual circular buffer length, that is, a part thereof has been punctured. Meanwhile, referring to the selected region 185 in the virtual circular buffer 1653B, it is recognized that the selected regions 186A and 186B in the repeating mode are longer than the virtual circular buffer length, that is, a part thereof has been repeatedly selected. More specifically, the selected region 186A is a region that is selected once while the selected region 186B is a region selected twice. Therefore, the repeating mode is used in a case in which the length of the output series from the rate matching unit 165 is longer than the length of the input series to the rate matching unit 165, and the puncturing mode is used in the opposite case.

(64) Interleaver 166

The interleaver 166 has a function of switching an order of the input series. Note that in the OFDMA or the CDMA, a transmission side secures uniqueness of messages and a scrambler for making it difficult to interpret the messages is used in many cases. An LTE scrambler is defined in both the uplink and the downlink in LTE, and the LTE scrambler is generally applied in the CW. However, the embodiment will be described on the assumption of an OFDMA-IDMA system and the assumption that an interleaver is used instead of the scrambler for multiplexing. It is a matter of course that the scrambler may be employed instead of or along with the interleaver. The interleaver may be a random interleaver or a deterministic interleaver.

(7) Modulation unit 167

The modulation unit 167 has a function of modulating the input series. In LTE, four modulation schemes, namely binary phase-shift keying (BPSK), quadrature phase-shift keying (QPSK), 16-quadrature-amplitude modulation (16QAM), and 64-quadrature-amplitude modulation (64QAM), are supported. For example, the modulation unit 167 uses a modulation scheme in accordance with a CQI index with reference to a correspondence table of CQI indexes indicating CQIs in the following table and the modulation schemes.

[Table 1]

| CQI | Modulation scheme |
| --- | --- |
| 1 | QPSK |
| 2 | QPSK |
| 3 | QPSK |
| 4 | QPSK |
| 5 | QPSK |
| 6 | QPSK |
| 7 | 16QAM |
| 8 | 16QAM |
| 9 | 16QAM |
| 10 | 64QAM |
| 11 | 64QAM |
| 12 | 64QAM |
| 13 | 64QAM |
| 14 | 64QAM |

(continued)

| CQI | Modulation scheme |
|-----|-------------------|
| 15 | 64QAM |

**(8) Layer mapping unit 168**

The layer mapping unit 168 has a function of mapping signals after the modulation in different layers. In LTE, the signals are mapped in a maximum of four layers. Layer mapping methods are different depending on conditions of the MIMO as illustrated in the following table.

[Table 2]

| Number of layers | Number of CWs | Layer mapping $i = 1, 2, ... M^{layer}_{symbol} - 1$ |
|------------------|---------------|------------------------------------------------------|
| 1 | 1 | $x^{(0)}(i) = d^{(0)}(i) \quad M^{layer}_{symb} = M^{(0)}_{symb}$ |
| 2 | 1 | $x^{(0)}(i) = d^{(0)}(2i) \quad x^{(1)}(i) = d^{(1)}(2i+1)$ <br> $M^{layer}_{symb} = M^{(0)}_{symb}/2$ |
| 2 | 2 | $x^{(0)}(i) = d^{(0)}(i) \quad x^{(1)}(i) = d^{(1)}(i)$ <br> $M^{layer}_{symb} = M^{(0)}_{symb} = M^{(1)}_{symb}$ |
| 3 | 2 | $x^{(0)}(i) = d^{(0)}(i) \quad x^{(1)}(i) = d^{(1)}(2i)$ <br> $x^{(2)}(i) = d^{(1)}(2i+1)$ <br> $M^{layer}_{symb} = M^{(0)}_{symb} = M^{(1)}_{symb}/2$ |
| 4 | 2 | $x^{(0)}(i) = d^{(0)}(2i) \quad x^{(1)}(i) = d^{(0)}(2i+1)$ <br> $x^{(2)}(i) = d^{(1)}(2i) \quad x^{(3)}(i) = d^{(1)}(2i+1)$ <br> $M^{layer}_{symb} = M^{(0)}_{symb}/2 = M^{(1)}_{symb}/2$ |

**(9) Precoding unit 169**

The precoding unit 169 has a function of performing precoding. The throughputs of the MIMO system is maximized by the precoding. Note that open loop spatial multiplexing (OLSM) is assumed to be employed as the transmission mode in the simulation.

**(10) Resource element mapping unit 170**

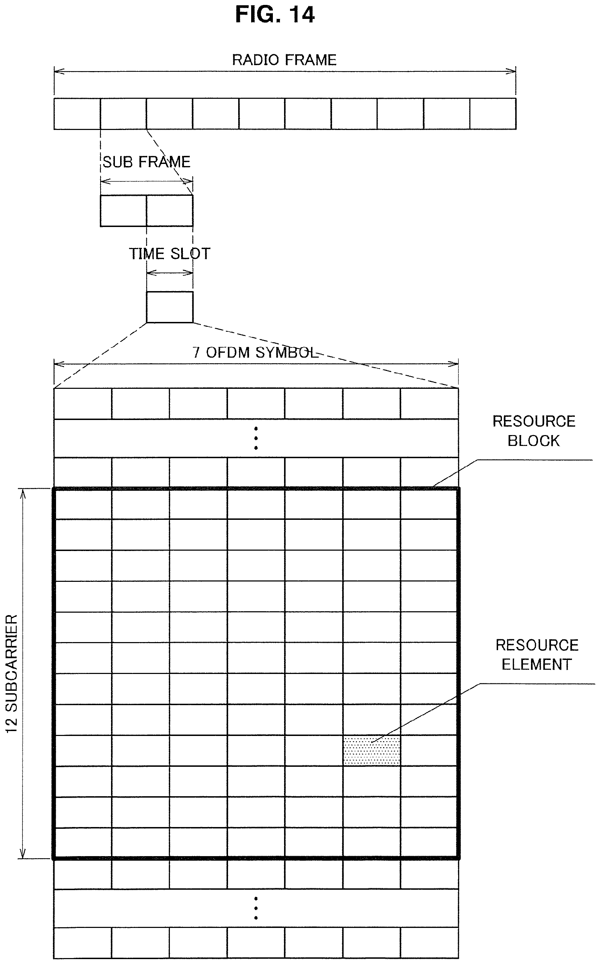

The resource element mapping unit 170 has a function of mapping signals after the precoding in time resources or frequency resources in the respective channels. In LTE, resource blocks (RB) and resource blocks (RE) are defined as resource grids sectioned by times and frequencies. Hereinafter, the resource grids will be described in more detail with reference to FIG. 14.

FIG. 14 is an explanatory diagram for describing resources in LTE. One radio frame includes ten sub-frames (1 millisecond (ms)). One sub-frame includes two time slots (0.5 ms). One resource block includes twelve sub-carriers and one time slot. The one time slot includes seven (in a case in which an ordinary cyclic prefix (CP) is used) or six (in a case in which an expanded CP is used) symbols (also referred to as OFDM symbols). An RE is a resource defined by one sub-carrier and one symbol. That is, one RB includes 84 or 72 REs.

(11) OFDM signal generation unit 171

The OFDM signal generation unit 171 has a function of generating OFDM signals from the signals mapped for the respective resource elements. For example, the OFDM signal generation unit 171 applies an inverse fast Fourier transform (IFFT) and inserts a guard interval (GI). Thereafter, the OFDM signals are transmitted from the antenna through the respective channels. Note that the OFDM signals are assumed to be transmitted through an additive white Gaussian noise (AWGN) channel in the simulation.

<3.2. Outline of reception processing>

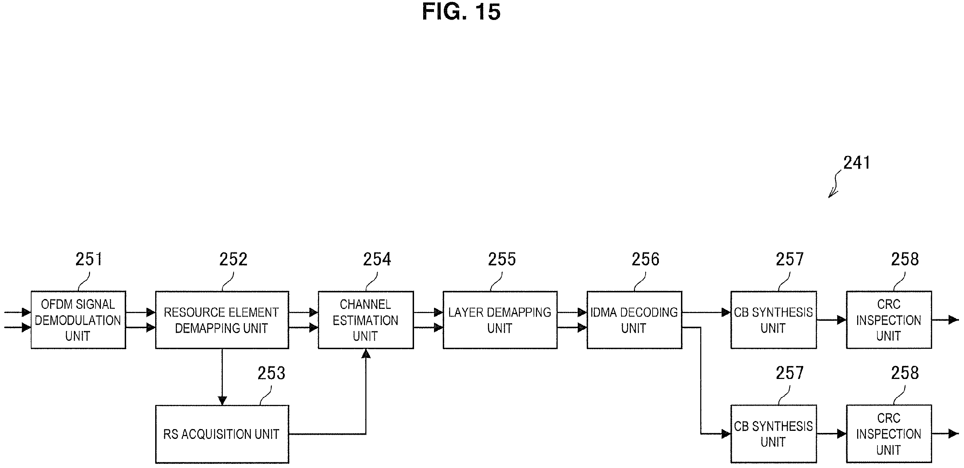

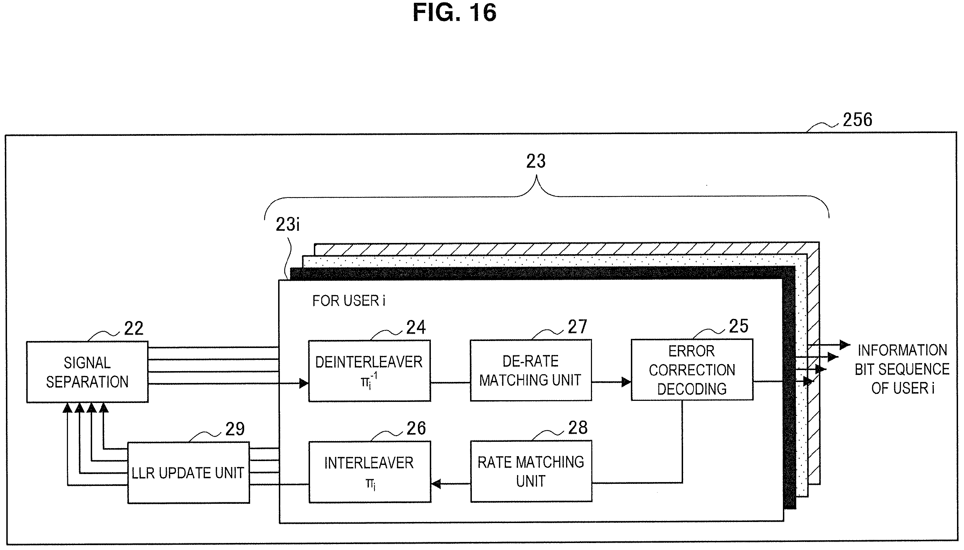

First, an outline of transmission processing performed by a terminal apparatus 200 (for example, the reception processing unit 241) will be described with reference to FIGS. 15 and 16.

FIG. 15 is an explanatory diagram for describing functional blocks related to reception processing performed by the terminal apparatus 200 according to the embodiment. As illustrated in FIG. 15, the reception processing unit 241 includes an OFDM signal demodulation unit 251, a resource element demapping unit 252, an RS acquisition unit 253, a channel estimation unit 254, a layer demapping unit 255, an IDMA decoding unit 256, a CB synthesis unit 257, and a CRC inspection unit 258. Hereinafter, the respective functional blocks will be described in detail. Note that, since operations of the respective functional blocks on the reception side are typically opposite to operations of corresponding functional blocks on the transmission side, detailed description will be omitted in some cases.

(1) OFDM signal demodulation unit 251

The OFDM signal demodulation unit 251 has a function of demodulating the OFDM signals.

(2) Resource element demapping unit 252

The resource element demapping unit 252 has a function of acquiring signals arranged in the respective resource elements of the demodulated OFDM signals.

(3) RS acquisition unit 253

The RS acquisition unit 253 has a function of acquiring reference signals (RSs) from a predetermined resource element.

(4) Channel estimation unit 254

The channel estimation unit 254 has a function of performing channel estimation. The channel estimation unit 254 performs the channel estimation with reference to the RS acquired by the RS acquisition unit 253. Note that a cell specific reference signal (CSR) is used and linear interpolation and cribbing are applied for the channel estimation in the simulation.

(5) Layer demapping unit 255

The layer demapping unit 255 has a function of acquiring the signals mapped in the respective layers.

(6) IDMA decoding unit 256

The IDMA decoding unit 256 has a function of decoding signals multiplexed by IDMA. The IDMA decoding unit 256 decodes the multiplexed signals by the SIC. A basic functional configuration of the IDMA decoding unit 256 is similar to that described above with reference to FIG. 4. An internal configuration of the IDMA decoding unit 256 according to the embodiment will be described in detail with reference to FIG. 16.

FIG. 16 is a block diagram illustrating an example of a theoretical configuration of the IDMA decoding unit 256 according to the embodiment. As illustrated in FIG. 16, the IDMA decoding unit 256 includes the signal separation circuit 22 described above with reference to FIG. 4 and one or mode decoding circuits 23, and in addition to them, the IDMA decoding unit 256 includes a de-rate matching unit 27, a rate matching unit 28, and an LLR update unit 29. A user signal input to a decoding circuit 23i is decoded by deinterleaving processing, de-rate matching processing, and error correction decoding. In a case in which the puncturing mode is employed on the transmission side, punctured bits are restored by the deinterleaving processing, and the bits have their original length before the rate matching processing on the transmission side. Meanwhile, in a case in which the repeating mode is employed on the transmission side, repeated bits are averaged, chosen or refused, for example, in the deinterleaving processing, and the bits have their original length before the rate matching processing on the transmission side. In a case in which the decoding can be accurately performed, the decoding circuit 23i outputs the decoded user signal as an information bit sequence for a user i. Meanwhile, in a case in which feedback to the signal separation circuit 22 is performed, the decoding circuit 23i applies the rate matching processing and the interleaving processing to the decoded user signal and returns the user signal to the signal separation circuit 22. At that time, the LLR update unit 29 calculates and updates the LLR of the decoded user signal.

(7) CB synthesis unit 257

The CB synthesis unit 257 has a function of synthesizing series (that is, CBs) output from the IDMA decoding unit 256 and generating TBs.

(8) CRC inspection unit 258

The CRC inspection unit 258 has a function of inspecting whether or not there is an error in the TBs output from the CB synthesis unit 257 by using the CRC.

<3.3. Introduction of new coding rate>

(1) New coding rate

In the claimed embodiment, a new coding rate that is generally lower than the coding rate according to the current LTE standard (hereinafter, also referred to as a current coding rate) is provided. A CQI table related to the new coding rate is illustrated as Table 3 below. Note that the current coding rate is also illustrated in Table 3 for comparison.

[Table 3]

| CQI index | Modulation scheme | Current coding rate | New coding rate |
|---|---|---|---|
| 1 | QPSK | 0.076172 | 0.076172 |
| 2 | QPSK | 0.1172 | 0.093 |
| 3 | QPSK | 0.1885 | 0.117 |
| 4 | QPSK | 0.3008 | 0.151 |
| 5 | QPSK | 0.4385 | 0.182 |
| 6 | QPSK | 0.5879 | 0.2275 |
| 7 | 16QAM | 0.3691 | 0.13025 |
| 8 | 16QAM | 0.4785 | 0.16125 |
| 9 | 16QAM | 0.6016 | 0.19425 |
| 10 | 64QAM | 0.4551 | 0.14255 |
| 11 | 64QAM | 0.5337 | 0.16765 |
| 12 | 64QAM | 0.6540 | 0.20215 |
| 13 | 64QAM | 0.7540 | 0.23515 |
| 14 | 64QAM | 0.8525 | 0.26725 |
| 15 | 64QAM | 0.9258 | 0.30205 |

The CQI table related to the combinations of CQI indexes, modulation schemes, and new coding rates as illustrated above in Table 3 will also be referred to as a first CQI table. In addition, a CQI table related to combinations of CQI indexes, modulation schemes, and current coding rates will also be referred to as a second CQI table.
As illustrated above in Table 3, the new coding rates are equal to or less than the current coding rates of the same CQI indexes. Referring to the first CQI table, a new coding rate of each CQI index is equal to or less than the coding rate before the rate matching, that is, the coding rate (1/3 in the current LTE standard) of the communication path coding (that is, error correction coding). The base station 100 (for example, the transmission processing unit 153) performs transmission signal processing using such a CQI table related to the new coding rates. It is possible to perform the rate matching processing in the repeating mode as will be described later in detail by employing the coding rates that are generally lower than the current coding rates as described above.

Note that the values of the new coding rates illustrated above in Table 3 are values in a case of one user. In a case in which multiplexing is performed for a plurality of users, the coding rates in the first CQI table may be equal to or less than values obtained by dividing the coding rates of the same CQI indexes in the second CQI table by the number of users for which multiplexing is performed.

The second CQI table includes CQI indexes with coding rates that exceed the coding rate (1/3 in the current LTE standard) of the communication path coding as illustrated above in Table 3. The base station 100 (for example, the transmission processing unit 153) may selectively use the first CQI table or the second CQI table. That is, the base station 100 can use both the new coding rate and the current coding rate. In this manner, it is possible to secure backward compatibility.

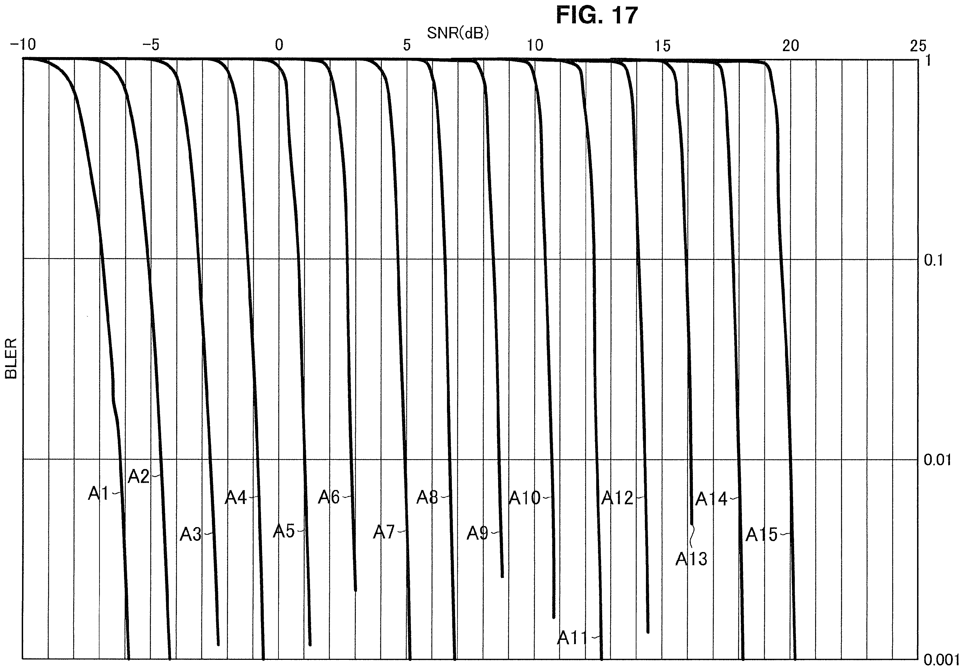

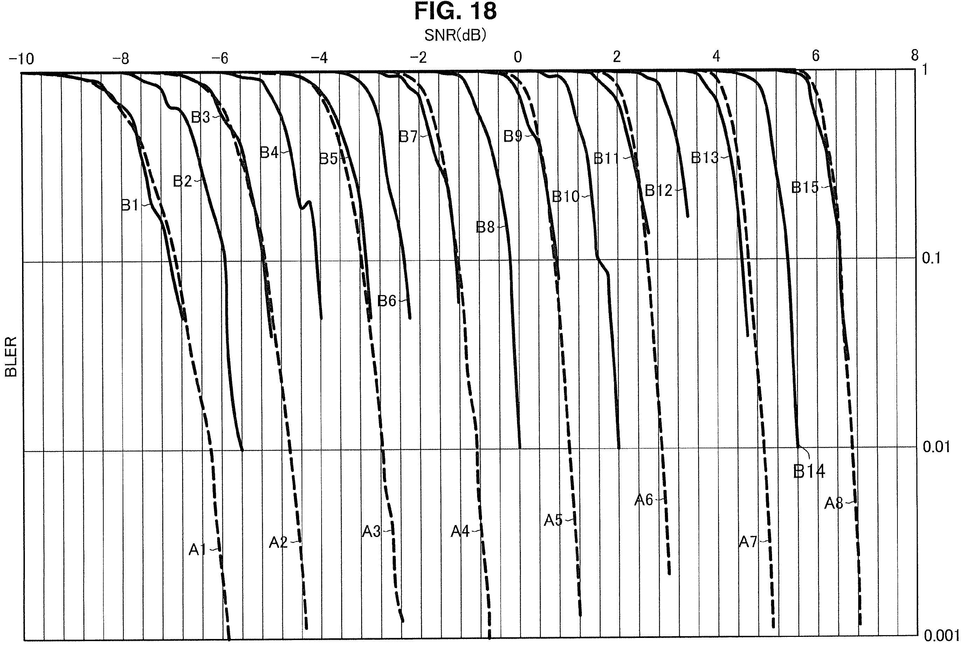

Hereinafter, BLER properties in a case in which the first CQI table is used and in a case in which the second CQI table is used will be compared with reference to FIGS. 17 and 18.

FIG. 17 is a diagram illustrating results of simulating the BLER properties in the case in which the second CQI table is used and in a case in which an OFDM signal for one user is transmitted through an AWGN channel. Specifically, the reference numeral A1 indicates the BLER properties in a case in which the CQI index is 1. The reference numeral A2 indicates the BLER properties in a case in which the CQI index is 2. The reference numeral A3 indicates the BLER properties in a case in which the CQI index is 3. The reference numeral A4 indicates the BLER properties in a case in which the CQI index is 4. The reference numeral A5 indicates the BLER properties in a case in which the CQI index is 5. The reference numeral A6 indicates the BLER properties in a case in which the CQI index is 6. The reference numeral A7 indicates the BLER properties in a case in which the CQI index is 7. The reference numeral A8 indicates the BLER properties in a case in which the CQI index is 8. The reference numeral A9 indicates the BLER properties in a case in which the CQI index is 9. The reference numeral A10 indicates the BLER properties in a case in which the CQI index is 10. The reference numeral A11 indicates the BLER properties in a case in which the CQI index is 11. The reference numeral A12 indicates the BLER properties in a case in which the CQI index is 12. The reference numeral A13 indicates the BLER properties in a case in which the CQI index is 13. The reference numeral A14 indicates the BLER properties in a case in which the CQI index is 14. The reference numeral A15 indicates the BLER properties in a case in which the CQI index is 15. As Illustrated in FIG. 17, the curves indicating the BLER properties are separated at equal intervals in the horizontal axis direction for any of the CQI indexes 1 to 15.

FIG. 18 is a diagram illustrating a result of simulating BLER properties in a case in which an OFDM signal for one user is transmitted through the AWGN channel in a case in which the first CQI table is used. Specifically, the reference numeral B1 indicates the BLER properties in a case in which the CQI index is 1. The reference numeral B2 indicates the BLER properties in a case in which the CQI index is 2. The reference numeral B3 indicates the BLER properties in a case in which the CQI index is 3. The reference numeral B4 indicates the BLER properties in a case in which the CQI index is 4. The reference numeral B5 indicates the BLER properties in a case in which the CQI index is 5. The reference numeral B6 indicates the BLER properties in a case in which the CQI index is 6. The reference numeral B7 indicates the BLER properties in a case in which the CQI index is 7. The reference numeral B8 indicates the BLER properties in a case in which the CQI index is 8. The reference numeral B9 indicates the BLER properties in a case in which the CQI index is 9. The reference numeral B10 indicates the BLER properties in a case in which the CQI index is 10. The reference numeral B11 indicates the BLER properties in a case in which the CQI index is 11. The reference numeral B12 indicates the BLER properties in a case in which the CQI index is 12. The reference numeral B13 indicates the BLER properties in a case in which the CQI index is 13. The reference numeral B14 indicates the BLER properties in a case in which the CQI index is 14. The reference numeral B15 indicates the BLER properties in a case in which the CQI index is 15. Note that FIG. 16 illustrates the BLER properties in a case in which the current coding rates are employed only for the CQI indexes = 1 to 8 for comparison (reference numerals A1 to A8).

As illustrated above in Table 3, since the current coding rate coincides with the new coding rate in the case in which the CQI index = 1, the curve represented by the reference numeral B1 substantially coincides with the curve represented by the reference numeral A1 as illustrated in FIG. 18. In addition, it is also recognized that the curves representing the BLER properties in the case in which the new coding rates are employed are also separated at equal intervals in the horizontal axis direction as illustrated in FIG. 18. Also, the intervals are about 1/2 of the intervals in the case in which the current coding rates are employed as illustrated in FIG. 18.

(2) Method of calculating new coding rate

It is possible to determine whether the rate matching processing has been performed in the repeating mode or in the puncturing mode by comparing the number of bits input to the rate matching unit 165 (that is, the buffer size) with the number of bits output from the rate matching unit 165. In the case of the puncturing mode, the buffer size is greater than the number of bits output. In contrast, in the case of the repeating mode, the number of bits output is greater than the buffer size. The number $L_{rm}$ of bits output from the rate matching unit 165 is calculated by the following formula, for example:
[Math. 1]

$$L_{rm} = \text{modu\_order} \times (num_{RB} \times (num_{SC/RB} \times num_{Sym/slot} - num_{RefSym}) - num_{SyncSym} - num_{CHSym}) \quad \cdots \ (1)$$

Content of the various parameters used in the above formula is illustrated in the following table.

[Table 4]

| Parameter | Explanation |
|---|---|
| modu_order | Modulation order (2: QPSK,4: 16QAM, 6:64QAM or the like) |
| $num_{RB}$ | Number of RBs |
| $num_{SC/RB}$ | Number of subcarriers per RB |
| $num_{Sym/slot}$ | Number of symbols per time slot |
| $num_{RefSym}$ | Number of reference symbols |
| $num_{SyncSym}$ | Number of synchronization symbols |
| $num_{CHSym}$ | Number of channel symbols |

The number of bits input to the rate matching unit 165 (that is, the buffer size $L_b$) is calculated by the following formula, for example:
[Math. 2]

$$L_b = \left\lceil round\left\{ L_{rm} \times \frac{\lceil coderate \times 1024 \rceil}{1024} \times 0.125 \right\} \times \frac{8}{32} \right\rceil \times 32 \times 3 \quad \cdots \ (2)$$

Here,
[Math. 3]

$$\lceil x \rceil \quad \cdots \ (3)$$

means a minimum integer that is greater than x.

In order to employ the repeating mode, that is, in order to satisfy $L_b \le L_{rm}$, satisfying the cording rate ≤ 1/3 is required as a condition. The value 1/3 is the coding rate (that is, the coding rate of the error correction code) of the communication path coding according to the current LTE standard. That is, in a case in in which the coding rate of the error correction code is changed, the value 1/3 is also changed in accordance with the change.

According to the above Table 3, the condition that the coding rate is to be equal to or less than 1/3 is satisfied, and the repeating mode is satisfied only in a case in which the CQI index is from 1 to 4 according to the current LTE standard. The employment of the repeating mode is similarly realized at the new coding rates if the condition that the coding rates are to be equal to or less than 1/3 is satisfied for any of the CQI indexes.

First, a case of QPSK, that is, a case in which the CQI index = 1 to 6 will be described. A new coding rate $C_{new}$ is defined by using a current coding rate $C_{old}$ as the following formula:

[Math. 4]

$$C_{new_{CQI=2i-1}} = C_{old_{CQI=i}}, \quad i = 1,2,3,... \quad \cdots \ (4)$$

The following new coding rate $C_{new}$ is obtained by the above formula.
[Math.5]

$$C_{new_{CQI=1}} = C_{old_{CQI=1}}$$
$$C_{new_{CQI=3}} = C_{old_{CQI=2}}$$
$$C_{new_{CQI=5}} = C_{old_{CQI=3}} \quad \cdots \ (5)$$
$$C_{new_{CQI=7}} = C_{old_{CQI=4}}$$

Note that the new coding rate $C_{new}$ of the above CQI index = 7 is a coding rate in a case in which the QPSK is employed. Since 16QAM is employed in practice in the case in which the CQI index = 7, a new different coding rate $C_{new}$, which will be described later, is set. The new coding rate $C_{new}$ in the case of another CQI index is an average value of new coding rates $C_{new}$ of adjacent CQI indexes as the following formula.
[Math. 6]

$$C_{new_{CQI=2}} = C_{new_{CQI=1}} + C_{new_{CQI=3}}$$
$$C_{new_{CQI=4}} = C_{new_{CQI=3}} + C_{new_{CQI=5}} \quad \cdots \ (6)$$
$$C_{new_{CQI=6}} = C_{new_{CQI=5}} + C_{new_{CQI=7}}$$

Next, cases of 16QAM and 64QAM, that is, cases in which the CQI index = 7 to 15 will be described. As for the current coding rates, the coding rates exceed 1/3 in the case in which the CQI index = 7 to 15, and the puncturing mode is employed. Thus, as for the new coding rates, the employment of the repeating mode is realized if the condition that the coding rates are to be equal to or less than 1/3 is satisfied for any of the CQI indexes. At that time, values calculated by the following formula may be regarded as upper limits of the new coding rates, for example:
[Math. 7]

$$C_{new_{CQI=i}} = \frac{1}{3} C_{old_{CQI=i}}, \quad i = 7,8,...,15 \quad \cdots \ (7)$$

The new coding rates illustrated above in Table 3 are provided by the calculation method described above.

(3) Employment of repeating method

In the case in which the new coding rates are employed, the base station 100 (for example, the transmission processing unit 153) performs the rate matching processing in the repeating mode. Then, the base station 100 (for example, the transmission processing unit 153) applies an interleaver after the rate matching processing and before the modulation. In this manner, it becomes possible to improve a bit error rate on the reception side. Hereinafter, an improvement in the bit error rate on the reception side by applying rate matching in the repeating mode and the following application of the interleaver will be specifically described on the assumption of a case in which the modulation scheme is 16QAM, as an example.

First, symbols corresponding to the respective bit sequences in 16QAM are illustrated in the following Table 5.

[Table 5]

| Bit sequence | Real part of symbol | Imaginary part of symbol |
|---|---|---|
| 0000 | $\frac{1}{\sqrt{10}}$ | $\frac{1}{\sqrt{10}}$ |
| 0001 | $\frac{1}{\sqrt{10}}$ | $\frac{3}{\sqrt{10}}$ |
| 0010 | $\frac{3}{\sqrt{10}}$ | $\frac{1}{\sqrt{10}}$ |
| 0011 | $\frac{3}{\sqrt{10}}$ | $\frac{3}{\sqrt{10}}$ |
| 0100 | $\frac{1}{\sqrt{10}}$ | $-\frac{1}{\sqrt{10}}$ |
| 0101 | $\frac{1}{\sqrt{10}}$ | $-\frac{3}{\sqrt{10}}$ |
| 0110 | $\frac{3}{\sqrt{10}}$ | $-\frac{1}{\sqrt{10}}$ |
| 0111 | $\frac{3}{\sqrt{10}}$ | $-\frac{3}{\sqrt{10}}$ |
| 1000 | $-\frac{1}{\sqrt{10}}$ | $\frac{1}{\sqrt{10}}$ |
| 1001 | $-\frac{1}{\sqrt{10}}$ | $\frac{3}{\sqrt{10}}$ |
| 1010 | $-\frac{3}{\sqrt{10}}$ | $\frac{1}{\sqrt{10}}$ |
| 1011 | $-\frac{3}{\sqrt{10}}$ | $\frac{3}{\sqrt{10}}$ |
| 1100 | $-\frac{1}{\sqrt{10}}$ | $-\frac{1}{\sqrt{10}}$ |
| 1101 | $-\frac{1}{\sqrt{10}}$ | $-\frac{3}{\sqrt{10}}$ |
| 1110 | $-\frac{3}{\sqrt{10}}$ | $-\frac{1}{\sqrt{10}}$ |
| 1111 | $-\frac{3}{\sqrt{10}}$ | $-\frac{3}{\sqrt{10}}$ |

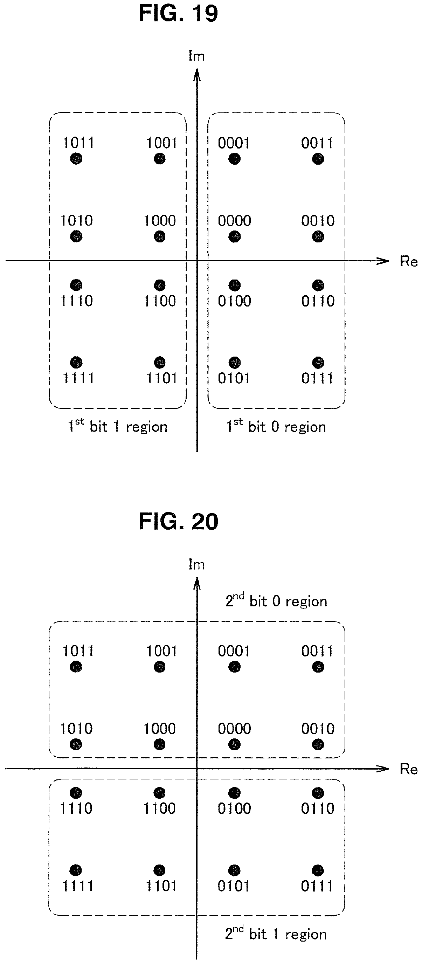

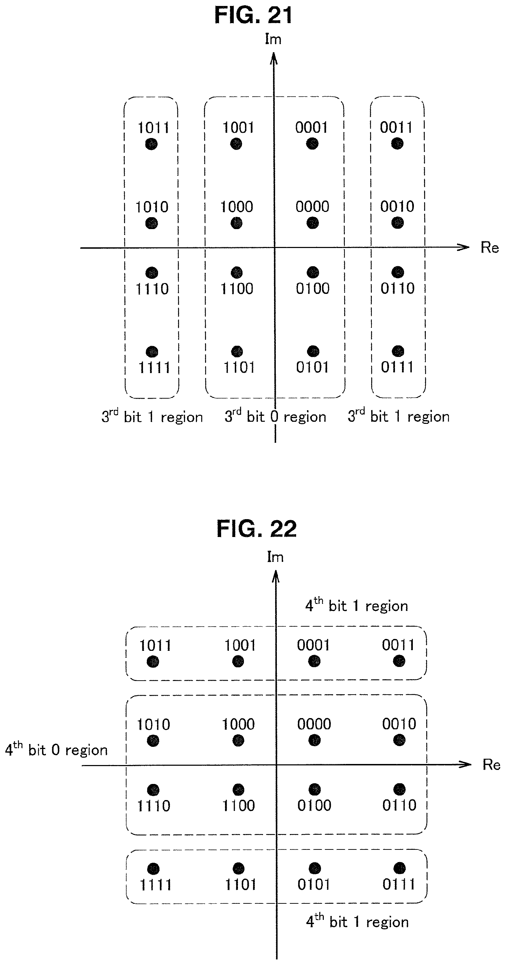

Asymmetry (or ununiformity) of constellation related to the respective bits in a bit sequence of 4 bits corresponding to one symbol will be described with reference to FIGS. 19 to 22. FIG. 19 is a diagram illustrating a region in which the first bit is 1 and a region in which the first bit is 0. FIG. 20 is a diagram illustrating a region in which the second bit is 1 and a region in which the second bit is 0. FIG. 21 is a diagram illustrating a region in which the third bit is 1 and a region in which the third bit is 0. FIG. 22 is a diagram illustrating a region in which the fourth bit is 1 and a region in which the fourth bit is 0.

Referring to FIGS. 19 and 20, it is recognized that in regard with the first bit and the second bit, the region in which the bit is 1 and the region in which the bit is 0 have similar shapes. Referring to FIG. 19, for example, the region in which the first bit is 1 and the region in which the first bit is 0 are two regions with the same shape that are divided by an imaginary axis. In addition, referring to FIG. 20, the region in which the second bit is 1 and the region in which the second bit is 0 are two regions with the same shape that are divided by a real axis. In a case in which the region in which the bit is 1 and the region in which the bit is 0 have the same shape in this manner, the bit error rates on the reception side are the same in the case in which the bit is 0 and in the case in which the bit is 1.

Meanwhile, referring to FIGS. 21 and 22, it is recognized that in regard to the third bit and the fourth bit, the region in which the bit is 1 and the region in which the bit is 0 have different shapes. Referring to FIG. 21, for example, the region in which the third bit is 0 is one region at the center that is long in the imaginary axis direction while the region in which the third bit is 1 corresponds to two regions with the region, in which the third bit is 0, interposed therebetween. In a case in which the region in which the bit is 1 and the region in which the bit is 0 have different shapes in this manner, the bit error rates on the reception side differ from each other in the case in which the bit is 0 and in the case in which the bit is 1. The difference in the error rates is caused by a difference between areas of the region in which the bit is 0 and the region in which the bit is 0. Specifically, the bit error rate in the region in which the bit is 0 tends to deteriorate as compared with the bit error rate in the region in which the bit is 1 in the case of the third bit in FIG. 21. Similarly, the bit error rate in the region in which the bit is 0 also tends to deteriorate as compared with the bit error rate in the region in which the bit is 1 in the case of the fourth bit in FIG. 22.

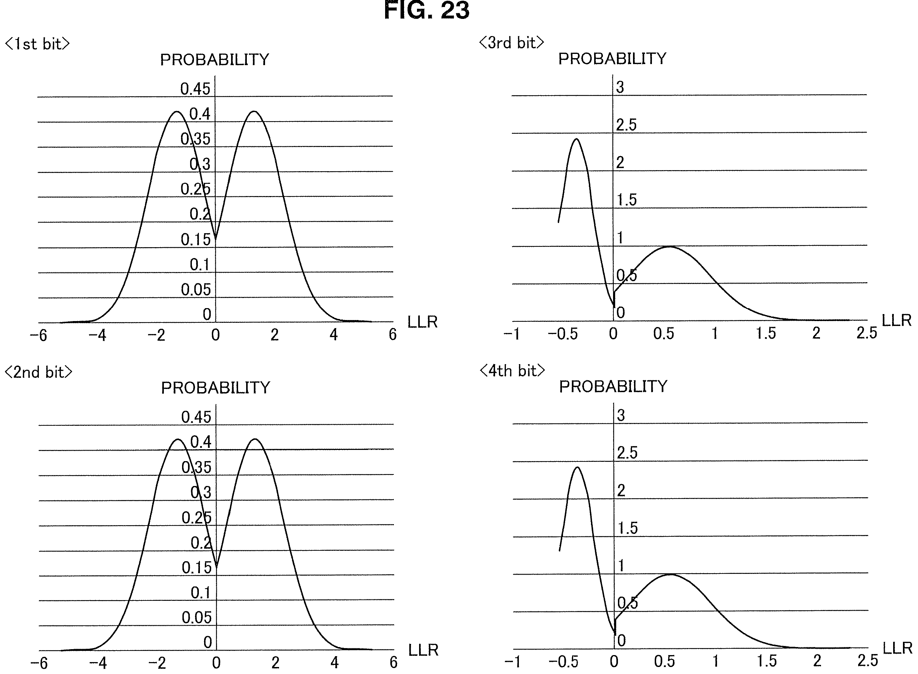

In a case in which the high-order modulation such as 16QAM or a higher order modulation is performed, deviation occurs in the bit error rates on the reception side depending on which order in the bit sequence corresponding to one symbol the bit is located. Such deviations in the bit error rates will be described with reference to FIG. 23.

FIG. 23 is a diagram illustrating a distribution of LLRs of the bits decoded on the reception side for each of four bits corresponding to one symbol in the 16QAM. The side on which the LLRs are positive represents a distribution of the LLRs in a case in which the bit is determined to be 1, and the side on which the LLRs are negative represents a distribution of the LLRs in a case in which the bit is determined to be 0. Referring to FIG. 23, the distributions of the LLRs are the same in the case in which the bit is 1 and in the case in which the bit is 0 in regard to the first bit and the second bit. However, in regard to the third bit and the fourth bit, the distributions are different in the case in which the bit is 1 and in a case in which the bit is 0. As for the third bit, for example, the probability at which the determination results of 0 are incorrect is higher than that in the case in which the bit is determined to be 1 since the distribution on the negative side concentrates on the vicinity of 0 as compared with the positive side. In addition, as for the fourth bit, the probability at which the determination results of 0 are incorrect is higher than that in the case in which the bit is determined to be 1 since the distribution on the negative side concentrates on the vicinity of 0 as compared with the positive side.

As described above, the deviations can occur in the bit error rates on the reception side depending on which order in the bit sequence corresponding to one symbol the bit is located in this manner. In regard to such deviations, the base station 100 (for example, the transmission processing unit 153) averages the deviations by employing the repeating mode and applying the interleaver.

First, series including overlapping due to repetition are output from the rate matching unit 165 and are rearranged by the interleaver 166 on the transmission side by employing the repeating mode. Therefore, the orders in the bit sequence corresponding to one symbol, in which the bit is located, are dispersed between the repeated same bits. Then, a value corresponding to a value obtained by performing weight addition on the repeated overlapping bit in accordance with the LLR or a value corresponding to higher LLR is employed and output for the series input to the de-rate matching unit 27 on the reception side. Since the aforementioned deviations of the bit error rates related to the asymmetry in the constellation are corrected by the dispersion of the positions of the overlapping bit in the bit sequence corresponding to one symbol at that time, it is possible to improve the entire bit error rates. In short, it is possible to improve the bit error rates by correcting the result of deciding lower LLRs with the result of decoding higher LLRs between the same repeated bits.

(4) Simulation result

Hereinafter, effects of the new coding rates will be described with reference to the simulation results of the system that employs the new coding rates illustrated above in Table 3.

First, simulation results related to the BLER properties in a case in which the current coding rate is employed will be described as a comparative example. Parameters related to the simulation are illustrated in Table 6 below.

[Table 6]

| Parameter | Value |
|---|---|
| Number of TBs | 10000 |
| Number of users | 1 or 2 |
| Multiplexing scheme | Interleaver |
| Transmission mode | SISO (single input and single output) |
| Channel mode | Independent AWGN |
| Electric power allocation | Same for each user |
| CQI index | 7 |
| Modulation scheme | 16QAM |
| Number of times of feedbacks | 4 |
| Coding rate | Current LTE standard |

Here, the "number of times of feedbacks" in the table illustrated above indicates the number of times the feedbacks are provided from the error correction decoding circuit 25 to the signal separation circuit 22 on the reception side.

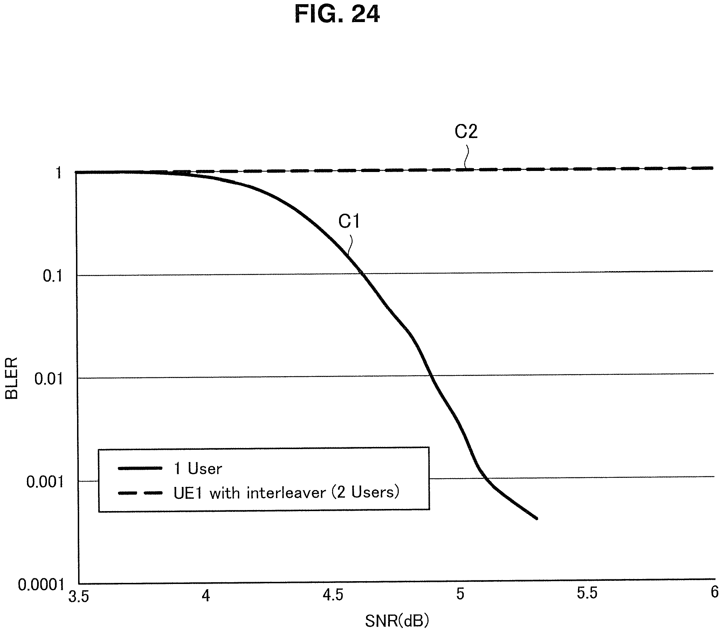

FIG. 24 is a diagram illustrating results of the simulation performed by employing the above parameters. The reference numeral C1 in FIG. 24 represents the BLER properties in a case of one user, and the reference numeral C2 represents the BLER properties in a case in which multiplexing is performed for two users. As illustrated in FIG. 24, it seems to be possible to perform decoding on the reception side in the case of the one user. However, it is not possible to perform the decoding on the reception side in the case in which the multiplexing is performed for the two users. This attributes to the high coding rate with low channel quality. Here, referring to Table 3 illustrated above, since the coding rate in the case in which the CQI index = 7 in the current LTE standard is "0.3691", and this exceeds 1/3, the puncturing mode is employed in the rate matching processing.

Next, simulation results related to the BLER properties in a case in which the new coding rate illustrated in Table 3 are employed will be described. Parameters related to the simulation are illustrated in Table 7 below.

[Table 7]

| Parameter | Value |
|---|---|
| Number of TBs | 10000 |
| Number of users | 1 or 2 |
| Multiplexing scheme | Interleaver |
| Transmission mode | SISO (single input and single output) |
| Channel mode | Independent AWGN |
| Electric power allocation | Same for each user |
| CQI index | 7 |
| Modulation scheme | 16QAM |
| Number of times of feedbacks | Variable |
| Coding rate | New coding rate |

Here, the number of times of feedbacks is variable in the simulation as illustrated above in Table 7.

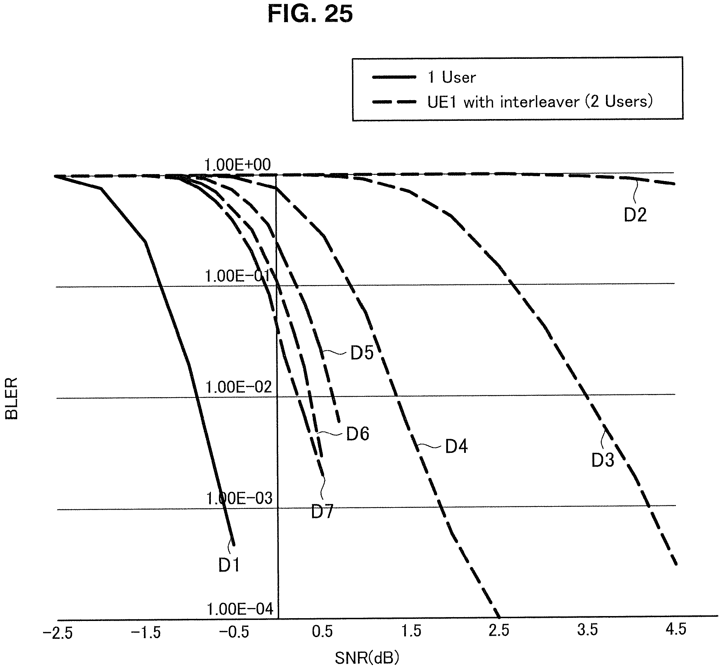

FIG. 25 is a diagram illustrating results of simulations performed by employing the above parameters. The reference numeral D1 represents the BLER properties in a case of one user, and the reference numerals D2 to D7 represent the BLER properties of the respective numbers of times of feedbacks in a case in which multiplexing is performed for two users in FIG. 25. Specifically, the number of feedbacks is one for the reference numeral D3, the number of feedbacks is four for the reference numeral D4, the number of feedbacks is ten for the reference numeral D5, the number of feedbacks is fifteen for the reference numeral D6, and the number of feedbacks is twenty for the reference numeral D7. Referring to the reference numeral D2, BLER substantially remains to be 1 in a case in which the number of times the feedbacks is 0. However, referring to the reference numerals D3 to D7, the BLER properties are improved as the number of times of the feedbacks increases. On the basis of the above fact, it is possible to state that user interference can be appropriately cancelled by the SIC and the performance thereof is improved as the number of times of feedbacks increases in the case in which the new coding rate is employed.

Although the embodiment has been described on the assumption of the IDMA system, a scrambler may be employed instead of or along with the interleaver here. However, more satisfactory decoding performance is achieved by employing the interleaver as compared with a case in which the scrambler is employed. This point will be described below.

Superiority of the interleaver as compared with the scrambler more significantly appears in a case of a high modulation order such as 16QAM. Hereinafter, parameters related to first simulation for describing the superiority of the interleaver as compared with the scrambler are illustrated in Table 8 below.

[Table 8]

| Parameter | Value |
|---|---|
| Number of TBs | 10000 |
| Number of users | 1 or 2 |
| Multiplexing scheme | Interleaver or scrambler |
| Transmission mode | SISO (single input and single output) |
| Channel mode | Independent AWGN |
| Electric power allocation | Same for each user |
| CQI index | 7 |
| Modulation scheme | 16QAM |
| Number of times of feedbacks | 4 |
| Coding rate | New coding rate |

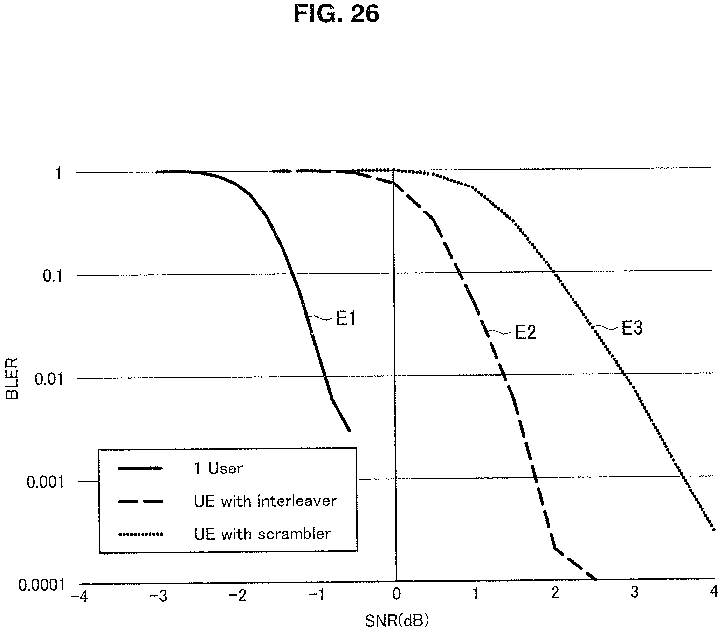

FIG. 26 is a diagram illustrating results of simulation performed by employing the above parameters. The reference numeral E1 represents the BLER properties in a case of one user, the reference numeral E2 represents the BLER properties in a case in which the multiplexing is performed by using the interleaver for two users, and the reference numeral E3 represents the BLER properties in a case in which the multiplexing is performed by using the scrambler for two users in FIG. 26. Referring to FIG. 26, more satisfactory BLER properties are achieved in the case in which the interleaver is employed as represented by the reference numeral E2 than in the case in which the scrambler is employed as represented by the reference numeral E3.

Next, parameters related to second simulation for describing superiority of the interleaver as compared with the scrambler are illustrated in Table 9 below.

[Table 9]

| Parameter | Value |
|---|---|
| Number of TBs | 10000 |
| Number of users | 1 or 2 |
| Multiplexing scheme | Interleaver or scrambler |
| Transmission mode | SISO (single input and single output) |
| Channel mode | Dependent Rayleigh fading |
| Electric power allocation | Same for each user |
| CQI index | 7 |
| Modulation scheme | 16QAM |
| Number of times of feedbacks | Variable |

(continued)

| Parameter | Value |
|---|---|
| Coding rate | New coding rate |

As illustrated above in the table, the BLER properties in a case in which a Rayleigh fading channel, in which the respective coefficients for the two users are the same, is employed as a channel mode were evaluated in the case in which the interleaver is employed and in the case in which the scrambler is employed in the simulation.

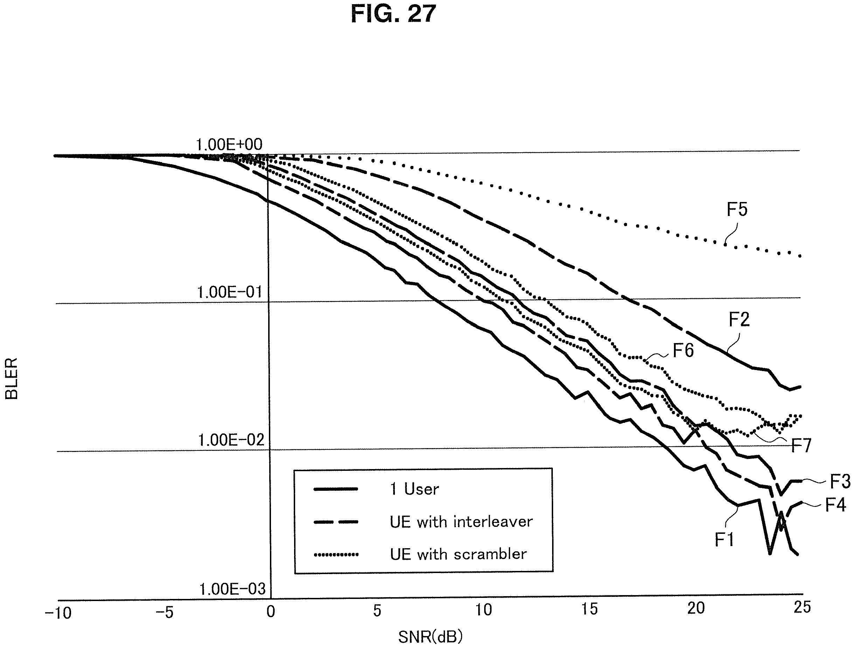

FIG. 27 is a diagram illustrating results of simulation performed by employing the above parameters. The reference numeral F1 in FIG. 27 represents the BLER properties in a case of one user. The reference numerals F2 to F4 represent the BLER properties of the respective numbers of times of feedbacks in a case in which the multiplexing is performed by using the interleaver for two users. Specifically, the number of feedbacks is zero for the reference numeral F2, the number of feedbacks is one for the reference numeral F3, and the number of feedbacks is four for the reference numeral F4. In addition, the reference numerals F5 to F7 represent the BLER properties of the respective numbers of times of feedbacks in a case in which the multiplexing is performed by using the scrambler for two users. Specifically, the number of feedbacks is zero for the reference numeral F5, the number of feedbacks is one for the reference numeral F6, and the number of feedbacks is four for the reference numeral F7. In comparison between the reference numeral F2 and the reference numeral F5, between the reference numeral F3 and the reference numeral F6, and between the reference numeral F4 and the reference numeral F7, more satisfactory BLER properties are achieved in the case in which the interleaver is employed than in the case in which the scrambler is employed, in the case of the same number of times of the feedbacks.

(5) Flow of processing

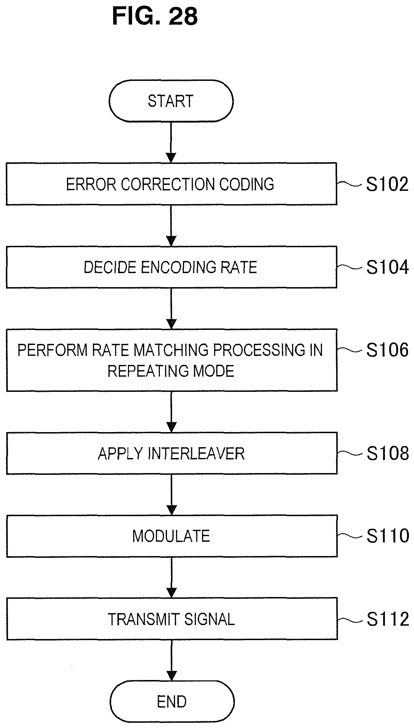

Next, an example of a flow of the transmission signal processing will be described with reference to FIG. 28. The transmission signal processing is basically performed in the order of the functional blocks illustrated in FIG. 9. Here, processing related to introduction of a new coding rate will be extracted and described.

FIG. 28 is a flowchart illustrating an example of a flow of the transmission signal processing performed by the base station 100 according to the embodiment. As illustrated in FIG. 28, the base station 100 performs channel coding on transmission series first (Step S102). Then, the base station 100 refers to the first CQI table and decides a coding rate to be applied (Step S104). Next, the base station 100 performs the rate matching processing in the repeating mode in order to realize the decided coding rate (Step S106). Then, the base station 100 applies the interleaver to the series including overlapping due to the repetition and rearranges the series (Step S108). Thereafter, the base station 100 performs modulation or the like on the series after the application of the interleaver (Step S110) and transmits the series (Step S112).

<3.4. Reduction in data size>

In order to introduce a new coding rate, it is desirable to cause the data size of transmitted data to change to have a smaller size than that provided in the current LTE standard. This is because there is a concern that it is difficult to realize the introduction of the new coding rate with the data size provided in the current LTE standard since the new coding rate is generally lower than the current coding rate.

Thus, the base station 100 (for example, the setting unit 151) sets the size of unit data to be transmitted on the basis of information related to the transmission signal processing. The unit data described herein is a TB generated by the TB generation unit 161, and the size thereof is also referred to as a Transport Block Size (TBS).

In particular, the base station 100 sets the size of the unit data to be smaller than the size of the unit data in the current LTE standard (hereinafter, also referred to as a reference data size). This is because the data size with which the data can be transmitted at a time becomes small at a low coding rate. It becomes possible to realize the introduction of the new coding rate with this setting.

Note that the reference data size can be calculated by an arbitrary method. For example, the reference data size may be decided in accordance with the current LTE standard. A detailed decision method is described in WO 2014/167883 (PCT/JP2014/052330), for example.

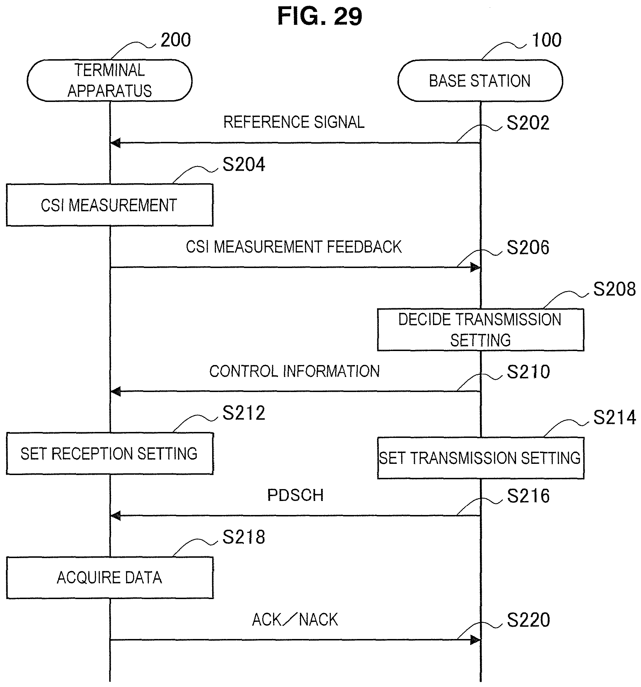

Hereinafter, a basic flow of the data size setting processing will be described with reference to FIG. 29.

(1) Basic flow

FIG. 29 is a sequence diagram illustrating an example of a flow of the data size setting processing in the downlink, which is executed by the system 1 according to the embodiment. The base station 100 and the terminal apparatus 200 are involved in the sequence.

As illustrated in FIG. 29, the base station 100 transmits a Reference Signal (RS) to the terminal apparatus 200 first (Step S202). Then, the terminal apparatus 200 performs CSI measurement on the basis of the received reference signal (Step S204) and transmits a Channel State Information (CSI) measurement feedback to the base station 100 (Step S206). A CQI index suitable for measured link quality is included in the CSI measurement feedback. In addition, a rank indicator (RI) that indicates the appropriate number of spatial layers in the MIMO, a precoding matrix indicator (PMI) that indicates an appropriate spatial precoder in the MIMO, and the like may be included in the CSI measurement feedback. Next, the base station 100 decides transmission setting such as the data size on the basis of the received CSI measurement feedback (Step S208). At this time, the base station 100 may decide a transmission schedule (for example, information for specifying a frequency (a resource block) and a time (a sub frame, a slot, or a symbol)), a modulation scheme, a coding rate, a precoder, and the like.

Then, the base station 100 transmits control information indicating content of the transmission setting to the terminal apparatus 200 by using downlink control information (DCI) on a physical downlink control channel (PDCCH) (Step S210). A TBS index, for example, is included as the information indicating the decided data size, and in addition, the information indicating the decided transmission schedule, modulation scheme, precoder, and the like may be included in the control information. Next, the terminal apparatus 200 decodes the received PDCCH, acquires the control information, and sets reception setting related to the received signal processing, such as the data size, in accordance with the control information (Step S212).

Meanwhile, the base station 100 sets the decided transmission setting such as a data size (Step S214). Then, the base station 100 performs the transmission signal processing in accordance with the transmission setting and transmits data to the terminal apparatus 200 on a physical downlink shared channel (PDSCH) (Step S216). Next, the terminal apparatus 200 demodulates and decodes the PDSCH on the basis of the reception setting and acquires the data (Step S218). Then, the terminal apparatus 200 transmits, to the base station 100, ACK in a case in which the terminal apparatus has successfully decoded the PDSCH or NACK in a case in which the terminal apparatus has failed to decode the PDSCH (Step s220), respectively.

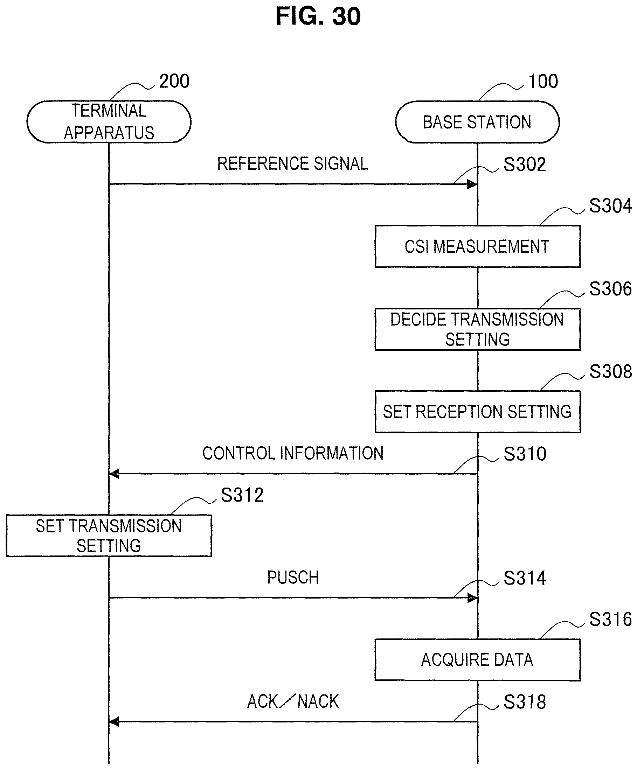

FIG. 30 is a sequence diagram illustrating an example of a flow of data size setting processing in the uplink, which is executed by the system 1 according to the embodiment. The base station 100 and the terminal apparatus 200 are involved in the sequence.

As illustrated in FIG. 30, the terminal apparatus 200 transmits a reference signal to the base station 100 first (Step S302). Then, the base station 100 performs CSI measurement on the basis of the received RS (Step S304) and decides transmission setting such as a data size (Step S306). In a case in which the transmission setting is decided by the base station 100, the CSI measurement feedback from the base station 100 to the terminal apparatus 200 may be omitted. Next, the base station 100 sets reception setting related to the reception signal processing, such as a data size, on the basis of the decided transmission setting (Step S308).

Then, the base station 100 transmits control information indicating content of the transmission setting to the terminal apparatus 200 by using the DCI on the PDCCH (Step S310). Next, the terminal apparatus 200 decodes the received PDCCH, acquires the control information, and sets the transmission setting such as a data size indicated by the control information (Step S312). Then, the terminal apparatus 200 performs transmission signal processing in accordance with the transmission setting and transmits data to the base station 100 on the PUSCH (Step S314). Next, the base station 100 demodulates and decodes the PUSCH on the bases of reception setting and acquires the data (Step S316). Then, the base station 100 transmits, to the terminal apparatus 200, ACK in a case in which the base station has successfully decoded the PUSCH or NACK in a case in which the base station has failed to decode the PUSCH, respectively (Step S318).

The basic flow of the data size setting processing has been described above. Here, the decision of the data size in Step S208 or Step S306 can be realized by various methods. Hereinafter, two methods will be described.

(2) First method

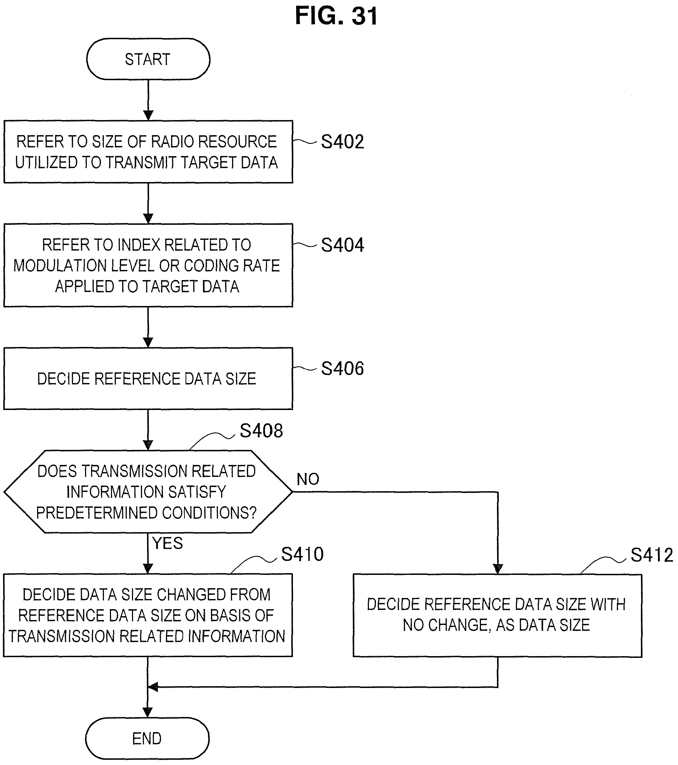

The first method is a method of deciding the data size in two stages. Specifically, the base station 100 (for example, the setting unit 151) decides and set the size of unit data by calculating a reference data size once and changing the reference data size on the basis of the information related to the transmission signal processing (hereinafter, also referred to as transmission related information). For example, the base station 100 employs the reference data size with no change in a case in which the transmission related information does not satisfy predetermined conditions or decided the data size by changing the reference data size in a case in which the transmission related information satisfies the predetermined conditions. Hereinafter, a flow of the processing related to the first method will be described with reference to FIG. 31.

FIG. 31 is a flowchart illustrating an example of a flow of the data size decision processing executed by the base station 100 according to the embodiment. As illustrated in FIG. 31, the base station 100 refers to the size of a radio resource to be utilized to transmit target data first (Step S402). Then, the base station 100 refers to an index (for example, the MCS index or the CQI index) related to the modulation level or the coding rate to be applied to the target data (Step S404). Next, the base station 100 decides the reference data size in accordance with the current LTE standard on the basis of the size of the radio resource and the index related to the modulation level or the coding rate (Step S406). Then, the base station 100 determines whether or not the transmission related information satisfies the predetermined conditions (Step S408). In a case in which it is determined that the transmission related information satisfies the predetermined conditions (Step S408/YES), the base station 100 decides a data size changed from the reference data size on the basis of the transmission related information (Step S410). Meanwhile, in a case in which it is determined that the transmission related information does not satisfy the predetermined conditions (Step S408/NO), the base station 100 decides the reference data size with no change as the data size (Step S412).

The flow of the processing related to the first method has been described above. Hereinafter, examples of the transmission related information and the predetermined conditions will be described.

(Change based on coding rate)

The transmission related information may include information indicating the coding rate to be applied to the target data (that is, the series as a transmission target). More specifically, the transmission related information may include information indicating which of the first CQI table and the second CQI table is to be used. For example, the base station 100 may change the data size from the reference data size in a case in which the first CQI table is used, or the base station 100 may employ the reference data size with no change in a case in which the second CQI table is used. Since new coding rates are generally low as compared with the current coding rates, it is desirable that the TBS after the change be smaller than the TBS defined by the current LTE standard.

If the lowest coding rate in the second CQI table is assumed to be r', the new coding rate applied from the first CQI table is assumed to be r, and $\alpha = r'/r$ is assumed, the data size $D_{TBS}$ after the change is calculated by the following formula on the basis of the reference data size $D'_{TBS}$:
[Math. 8]

$$D_{TBS} \leq \alpha' D'_{TBS} \qquad \cdots \ (8)$$

Note that rounding-down or rounding-up processing may be applied to the data size $D_{TBS}$ after the change as the following formula:
[Math. 9]

$$D_{TBS} \leq floor\{\alpha D'_{TBS}\}$$
$$D_{TBS} \leq ceil\{\alpha D'_{TBS}\} \qquad \cdots \ (9)$$

It becomes possible to realize the change to reduce the data size to be smaller than the reference data size and to introduce the new coding rate in this manner.

(Change based on resource size)

The transmission related information may include information indicating the size of a radio resource utilized to transmit target data. In a case in which the size of the radio resource is changed from the assumption at the time of calculating the reference data size, for example, the base station 100 changes the reference data size. A time resource will be described as an example.

For example, if the size of the time resource (for example, a sub-frame) assumed at the time of calculating the reference data size is assumed to be T', the size of the time resource applied at the time of actual data transmission is assumed to be T, and $\beta = T'/T$ is assumed, the data size $D_{TBS}$ after the change is calculated by the following formula:
[Math. 10]

$$D_{TBS} \le \beta D'_{TBS}$$
$$D_{TBS} \le floor\left\{\beta D'_{TBS}\right\} \quad \cdots \quad (1\,0)$$
$$D_{TBS} \le ceil\left\{\beta D'_{TBS}\right\}$$

It becomes possible to realize the change to reduce the data size to be smaller than the reference data size and to introduce the new coding rate in this manner.

(Change based on number of multiplex)

The transmission related information may include information indicating the number of multiplex of the radio resource utilized to transmit target data. The number of multiplex described herein is the number of data items transmitted with resources, such as frequency resources, time resources, spatial resources, or the like, at least partially multiplexed. In a case in which the number of multiplex of the target data is a predetermined value, for example, the base station 100 changes the data size. If the number of multiplex is assumed to be N, for example, the data size $D_{TBS}$ after the change is calculated by the following formula:
[Math. 11]

$$D_{TBS} \le \frac{D'_{TBS}}{N}$$
$$D_{TBS} \le floor\left\{\frac{D'_{TBS}}{N}\right\} \quad \cdots \quad (1\,1)$$
$$D_{TBS} \le ceil\left\{\frac{D'_{TBS}}{N}\right\}$$

It becomes possible to realize the change to reduce the data size to be smaller than the reference data size and to introduce the new coding rate in this manner.
In a case in which the number of data items to be multiplexed is two or more, in particular, it is desirable that the data size be changed by the above formula. In addition, it is desirable either the transmission apparatus or the reception apparatus be different for the target data and at least a part of other data to be multiplexed with the target data. In addition, the number of data items may be interpreted as the number of transmission apparatuses in a case in which an uplink is assumed. That is, in a case in which a plurality of transmission apparatuses that utilizes at least a part of radio resources in an overlapping manner are present even in a case in which each of the transmission apparatus transmits only one data item, the number of transmission apparatuses corresponds to N.

(Change based on terminal category)

The transmission related information may include information indicating a type of the transmission apparatus that transmits the target data or the reception apparatus that receives the target data. The type means a terminal category (UE category), for example. In a case in which the transmission apparatus or the reception apparatus of the target data corresponds to a predetermined terminal category, for example, the base station 100 calculates the data size $D_{TBS}$ after the change by the following formula using the data size change coefficient $\gamma$:
[Math. 12]

$$D_{TBS} \leq \frac{D'_{TBS}}{\gamma}$$

$$D_{TBS} \leq floor\left\{\frac{D'_{TBS}}{\gamma}\right\} \quad \cdots \quad (1\,2)$$

$$D_{TBS} \leq ceil\left\{\frac{D'_{TBS}}{\gamma}\right\}$$

It becomes possible to realize the change to reduce the data size to be smaller than the reference data size and to introduce the new coding rate in this manner. Note that it is desirable that the data size change coefficient $\gamma$ be a value that is equal to or greater than 1.

Here, the terminal categories illustrated in Tables 10 to 13 below can be exemplified as examples of the terminal category. These respective tables provide terminal categories defined by the current LTE standard. It is desirable that terminal categories as targets of change of the data size satisfy a predetermined requirement. The predetermined requirement may include that a value of "the maximum number of DLSCH or ULSCH received within a transmission time interval (TTI) (maximum number of DL/UL-SCH transport block bits received within a TTI)" is to be relatively small, for example. In addition, the predetermined requirement may include that a value of "the total number of soft channel bits" is to be relatively small, for example. In addition, the predetermined requirement may include that a value of "the maximum number of supported layers for spatial multiplexing" is small or 1, for example. In addition, the predetermined requirement may include that higher modulation orders such as 64QAM, 256QAM, or the like is not supported, for example. The data size change coefficient $\gamma$ may be a different value for each terminal category.

[Table 10]

| 3GPP TS36.306(v12.5.0) Table 4.1-1 | | | | |
|---|---|---|---|---|
| (UE Category) | Maximum number of DL-SCH transport block bits received within a TTI | Maximum number of bits of a DL-SCH transport block received within a TTI | Total number of soft channel bits | Maximum number of supported layers for spatial multiplexing in DL |
| Category 1 | 10296 | 10296 | 250368 | 1 |
| Category 2 | 51024 | 51024 | 1237248 | 2 |
| Category 3 | 102048 | 75376 | 1237248 | 2 |
| Category 4 | 150752 | 75376 | 1827072 | 2 |
| Category 5 | 299552 | 149776 | 3667200 | 4 |
| Category 6 | 301504 | 149776 (4 layers, 64QAM) 75376 (2 layers, 64QAM) | 3654144 | 2 or 4 |
| Category 7 | 301504 | 149776 (4 layers, 64QAM) 75376 (2 layers, 64QAM) | 3654144 | 2 or 4 |
| Category 8 | 2998560 | 299856 | 35982720 | 8 |
| Category 9 | 452256 | 149776 (4 layers, 64QAM) | 5481216 | 2 or 4 |

(continued)

| 3GPP TS36.306(v12.5.0) Table 4.1-1 | | | | |
|---|---|---|---|---|
| (UE Category) | Maximum number of DL-SCH transport block bits received within a TTI | Maximum number of bits of a DL-SCH transport block received within a TTI | Total number of soft channel bits | Maximum number of supported layers for spatial multiplexing in DL |
| | | 75376 (2 layers, 64QAM) | | |
| Category 10 | 452256 | 149776 (4 layers, 64QAM)<br>75376 (2 layers, 64QAM) | 5481216 | 2 or 4 |
| Category 11 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |
| Category 12 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |

[Table 11]

| 3GPP TS36.306(v12.5.0) Table 4.1A-1 | | | | |
|---|---|---|---|---|
| UE DL Category | Maximum number of DL-SCH transport block bits received within a TTI | Maximum number of bits of a DL-SCH transport block received within a TTI | Total number of soft channel bits | Maximum number of supported layers for spatial multiplexing in DL |
| DL Category 0 | 1000 | 1000 | 25344 | 1 |
| DL Category 6 | 301504 | 149776 (4 layers, 64QAM)<br>75376 (2 layers, 64QAM) | 3654144 | 2 or 4 |
| DL Category 7 | 301504 | 149776 (4 layers, 64QAM)<br>75376 (2 layers, 64QAM) | 3654144 | 2 or 4 |
| DL Category 9 | 452256 | 149776 (4 layers, 64QAM)<br>75376 (2 layers, 64QAM) | 5481216 | 2 or 4 |
| DL Category 10 | 452256 | 149776 (4 layers, 64QAM)<br>75376 (2 layers, 64QAM) | 5481216 | 2 or 4 |

(continued)

| 3GPP TS36.306(v12.5.0) Table 4.1A-1 | | | | |
|---|---|---|---|---|
| UE DL Category | Maximum number of DL-SCH transport block bits received within a TTI | Maximum number of bits of a DL-SCH transport block received within a TTI | Total number of soft channel bits | Maximum number of supported layers for spatial multiplexing in DL |
| DL Category 11 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |
| DL Category 12 | 603008 | 149776 (4 layers, 64QAM)<br>195816 (4 layers, 256QAM)<br>75376 (2 layers, 64QAM)<br>97896 (2 layers, 256QAM) | 7308288 | 2 or 4 |
| DL Category 13 | 391632 | 195816 (4 layers, 256QAM)<br>97896 (2 layers, 256QAM) | 3654144 | 2 or 4 |
| DL Category 14 | 3916560 | 391656 (8 layers, 256QAM) | 47431680 | 8 |
| DL Category 15 | 749856-798800 | 149776 (4 layers, 64QAM)<br>195816 (4 layers, 256QAM)<br>75376 (2 layers, 64QAM)<br>97896 (2 layers, 256QAM) | 9744384 | 2 or 4 |
| DL Category 16 | 978960<br>-1051360 | 149776 (4 layers, 64QAM)<br>195816 (4 layers, 256QAM)<br>97896 (2 layers, 256QAM) | 12789504 | 2 or 4 |

[Table 12]

| 3GPP TS36.306 (v12. 5. 0) Table 4.1-2 | | | |
|---|---|---|---|
| UE Category | Maximum number of UL-SCH transport block bits transmitted within a TTI | Maximum number of bits of an UL-SCH transport block transmitted within a TTI | Support for 64QAM in UL |
| Category 1 | 5160 | 5160 | No |
| Category 2 | 25456 | 25456 | No |
| Category 3 | 51024 | 51024 | No |

(continued)

| 3GPP TS36.306 (v12. 5. 0) Table 4.1-2 | | | |
|---|---|---|---|
| UE Category | Maximum number of UL-SCH transport block bits transmitted within a TTI | Maximum number of bits of an UL-SCH transport block transmitted within a TTI | Support for 64QAM in UL |
| Category 4 | 51024 | 51024 | No |
| Category 5 | 75376 | 75376 | Yes |
| Category 6 | 51024 | 51024 | No |
| Category 7 | 102048 | 51024 | No |
| Category 8 | 1497760 | 149776 | Yes |
| Category 9 | 51024 | 51024 | No |
| Category 10 | 102048 | 51024 | No |
| Category 11 | 51024 | 51024 | No |
| Category 12 | 102048 | 51024 | No |

[Table 13]

| 3GPP TS36.306 (v12. 5. 0) Table 4.1A-2 | | | |
|---|---|---|---|
| UE UL Category | Maximum number of UL-SCH transport block bits transmitted within a TTI | Maximum number of bits of an UL-SCH transport block transmitted within a TTI | Support for 64QAM in UL |
| UL Category 0 | 1000 | 1000 | No |
| UL Category 3 | 51024 | 51024 | No |
| UL Category 5 | 75376 | 75376 | Yes |
| UL Category 7 | 102048 | 51024 | No |
| UL Category 8 | 1497760 | 149776 | Yes |
| UL Category 13 | 150752 | 75376 | Yes |

(Change based on QoS)

The transmission related information may include information indicating service quality associated with the target data. For example, the base station 100 may change the data size of the data, with which predetermined Quality of Service (QoS) is associated, from the reference data size. In a case in which the predetermined QoS is associated with the target data, for example, the base station 100 calculates the data size $D_{TBS}$ after the change by the following formula using the data size change coefficient $\varepsilon$:

[Math. 13]

$$D_{TBS} \leq \frac{D'_{TBS}}{\varepsilon}$$

$$D_{TBS} \leq floor\left\{\frac{D'_{TBS}}{\varepsilon}\right\} \quad \cdots \quad (1\ 3)$$

$$D_{TBS} \leq ceil\left\{\frac{D'_{TBS}}{\varepsilon}\right\}$$

It becomes possible to realize the change to reduce the data size to be smaller than the reference data size and to introduce the new coding rate in this manner. Note that it is desirable that the data size change coefficient $\varepsilon$ be a value that is equal to or greater than 1.

Here, quality class identifiers (QCIs) illustrated in Table 14 below can be exemplified as examples of the QoS. The table relates to the QoS defined by the current LTE standard. It is desirable that a QCI as a target of change of the data size satisfy a predetermined requirement. The predetermined requirement may include that high reliability is to be defined, and for example, "PER" is to be relatively small. In addition, the predetermined requirement may include that a value of "priority" is relatively large, that is, the priority order is low. In addition, the predetermined requirement may include that a value of "a delay time" is relatively large, that is a requirement for a delay is lax.

[Table 14]

| 3GPP TS23.203 Table 6.1.7 | | | | | |
|---|---|---|---|---|---|
| QCI | Resource Type | Priority | Delay time (Packet Delay budget) [ms] | PER (Packet error loss rate) | Example service |
| 1 | Minimum Guaranteed Bit Rate (GBR) | 2 | 100 | $10^{-2}$ | Conversational voice |
| 2 | GBR | 4 | 150 | $10^{-3}$ | Conversational video (live streaming) |
| 3 | GBR | 5 | 300 | $10^{-6}$ | Non-conversational video (buffered streaming) |
| 4 | GBR | 3 | 50 | $10^{-3}$ | Real time gaming |
| 5 | Non-GBR | 1 | 100 | $10^{-6}$ | IMS signaling |
| 6 | Non-GBR | 7 | 100 | $10^{-3}$ | Voice, video (live streaming), interactive gaming |
| 7 | Non-GBR | 6 | 300 | $10^{-6}$ | Video (buffered streaming) |
| 8 | Non-GBR | 8 | 300 | $10^{-6}$ | TCP-based service (e.g. WWW, e-mail), chat, FTP, p2p file sharing service |
| 9 | Non-GBR | 9 | 300 | $10^{-6}$ | |

(Change based on mobility)

The transmission related information may include information indicating mobility (for example, a moving speed) of the transmission apparatus that transmits the target data or the reception apparatus that receives the target data. Since a reception error tends to occur during high-speed movement due to an influence of variations in electric wave transmission paths, it is desirable that a new coding rate (that is, a coding rate that is lower than the current coding rate) be applied in order to achieve stable reception quality. Therefore, the base station 100 realizes the new coding rate by changing the data size in the case in which the transmission apparatus or the reception apparatus of the target data is moving at a speed that is equal to or higher than a predetermined speed.

(Combinations)

The references for changing the data size described above may be appropriately combined. For example, the base station 100 may calculates the data size $D_{TBS}$ after the change by the following formula:
[Math. 14]

$$D_{TBS} \leq \frac{\alpha \beta D'_{TBS}}{\gamma \varepsilon N}$$

$$D_{TBS} \leq floor\left\{\frac{\alpha \beta D'_{TBS}}{\gamma \varepsilon N}\right\} \quad \cdots \quad (1\ 4)$$

$$D_{TBS} \leq ceil\left\{\frac{\alpha \beta D'_{TBS}}{\gamma \varepsilon N}\right\}$$

(2) Second method

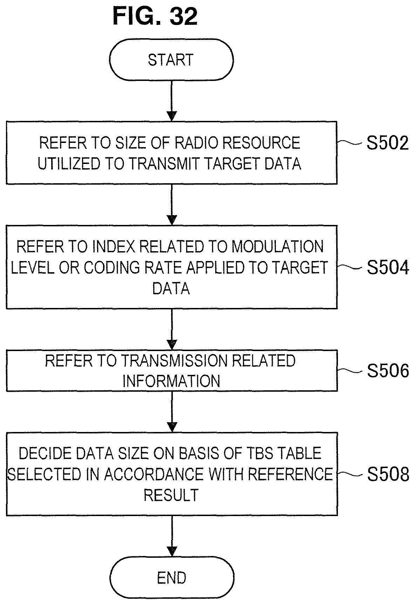

The second method is a method of directly deciding the data size by omitting the decision of the reference data size. Information to be referred to decide the data size is similar to the transmission related information referred to in the first method.
For example, the base station 100 (for example, the setting unit 151) refers to different tables (for example, the TBS table) for setting the size of the unit data in accordance with the transmission related information in the case in which the first CQI table is used and in the case in which the second CQI table is used. Specifically, the base station 100 refers to the TBS table in the current LTE standard and decides the data size in a case in which the transmission related information (for example, the coding rate, the resource size, the number of multiplex, a terminal category, QoS, mobility, and the like) does not satisfy predetermined conditions. Meanwhile, the base station 100 refers to a new TBS table to decide the data size in a case in which the transmission related information satisfies the predetermined conditions. The new TBS table may be present for each of the predetermined conditions for the transmission related information, for example (a TBS table in a case in which the coding rate is 0.01 and the number of multiplex is 2, a TBS table in a case in which the coding rate is 0.02 and the number of multiplex is 3, and the like may be present, for example). That is, in a case in which the transmission related information satisfies the predetermined conditions, the base station 100 may switch the new TBS table to be referred to in accordance with the satisfied predetermined conditions.
It is desirable that the size of data described in the new TBS table referred to in the case in which the transmission related information satisfies the predetermined conditions be smaller than the size of data described in the TBS table in the current LTE standard, which is referred to in the case in which the transmission related information does not satisfy the predetermined conditions. In this manner, the new coding rate is realized.
It is desirable that the size of the new TBS table be the same as or smaller than the size of the TBS table in the current LTE standard. In this manner, it becomes possible to divert information elements (IEs) of the DCI that have been used in the related art and to prevent addition of IEs. Note that the size of the TBS table described herein indicates at least any of the number (the number of columns in the TBS table in the current LTE standard) of directions corresponding to radio resources (that is, resource blocks) or the number (the number of rows in the TBS table in the current LTE standard) of the directions corresponding to the indexes related to the modulation level or the coding rate.
Hereinafter, a flow of the processing related to the second method will be described with reference to FIG. 32.
FIG. 32 is a flowchart illustrating an example of a flow of the data size decision processing executed by the base station 100 according to the embodiment. As illustrated in FIG. 32, the base station 100 refers to the size of a radio resource to be utilized to transmit target data (Step S502). Then, the base station 100 refers to an index (for example, the MCS index or the CQI index) related to the modulation level or the coding rate to be applied to the target data (Step S504). Next, the base station 100 refers to the transmission related information (Step S506). Then, the base station 100 selects a TBS table on the basis of the size of the radio resource, the index related to the modulation level or the coding rate, and the transmission related information and decides the data size on the basis of the selected TBS table (Step S508).

«4. Application examples»

The technology of the present disclosure can be applied to various products. For example, the base station 100 may be realized as any type of evolved Node B (eNB) such as a macro eNB, and a small eNB. A small eNB may be an eNB that covers a cell smaller than a macro cell, such as a pico eNB, micro eNB, or home (femto) eNB. Instead, the base station 100 may be realized as any other types of base stations such as a NodeB and a base transceiver station (BTS). The base station 100 may include a main body (that is also referred to as a base station apparatus) configured to control radio communication, and one or more remote radio heads (RRH) disposed in a different place from the main body. Additionally, various types of terminals to be discussed later may also operate as the base station 100 by temporarily or semi-permanently executing a base station function. Furthermore, at least a part of elements of the base station 100 may be realized in the base station apparatus or a module for the base station apparatus.

For example, the terminal apparatus 200 may be realized as a mobile terminal such as a smartphone, a tablet personal computer (PC), a notebook PC, a portable game terminal, a portable/dongle type mobile router, and a digital camera, or an in-vehicle terminal such as a car navigation apparatus. The terminal apparatus 200 may also be realized as a terminal (that is also referred to as a machine type communication (MTC) terminal) that performs machine-to-machine (M2M) communication. Furthermore, at least a part of elements of the terminal apparatus 200 may be realized in a module (such as an integrated circuit module including a single die) mounted on each of the terminals.

<4.1. Application Examples Regarding Base Station>

(First Application Example)

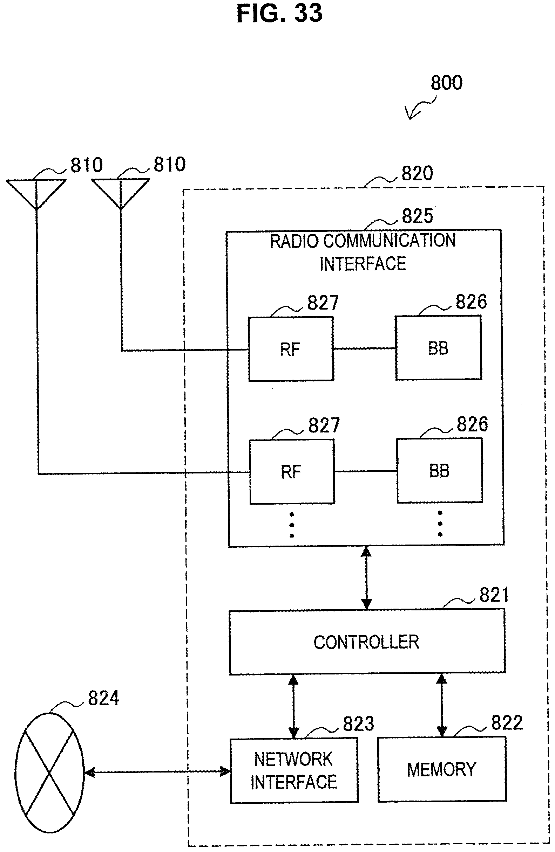

FIG. 33 is a block diagram illustrating a first example of a schematic configuration of an eNB to which the technology of an embodiment of the present disclosure may be applied. An eNB 800 includes one or more antennas 810 and a base station apparatus 820. Each antenna 810 and the base station apparatus 820 may be connected to each other via an RF cable.

Each of the antennas 810 includes a single or multiple antenna elements (such as multiple antenna elements included in an MIMO antenna), and is used for the base station apparatus 820 to transmit and receive radio signals. The eNB 800 may include the multiple antennas 810, as illustrated in FIG. 33. For example, the multiple antennas 810 may be compatible with multiple frequency bands used by the eNB 800. Although FIG. 33 illustrates the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control, and scheduling. The control may be performed in corporation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station apparatus 820 to a core network 824. The controller 821 may communicate with a core network node or another eNB via the network interface 823. In that case, the eNB 800, and the core network node or the other eNB may be connected to each other through a logical interface (such as an S1 interface and an X2 interace). The network interface 823 may also be a wired communication interface or a radio communication interface for radio backhaul. If the network interface 823 is a radio communication interface, the network interface 823 may use a higher frequency band for radio communication than a frequency band used by the radio communication interface 825.

The radio communication interface 825 supports any cellular communication scheme such as Long Term Evolution (LTE) and LTE-Advanced, and provides radio connection to a terminal positioned in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives radio signals via the antenna 810.

The radio communication interface 825 may include the multiple BB processors 826, as illustrated in FIG. 33. For example, the multiple BB processors 826 may be compatible with multiple frequency bands used by the eNB 800. The radio communication interface 825 may include the multiple RF circuits 827, as illustrated in FIG. 33. For example, the multiple RF circuits 827 may be compatible with multiple antenna elements. Although FIG. 33 illustrates the example in which the radio communication interface 825 includes the multiple BB processors 826 and the multiple RF circuits 827, the radio communication interface 825 may also include a single BB processor 826 or a single RF circuit 827.

In the eNB 800 illustrated in FIG. 33, a single or multiple elements included in the base station 100 described by using FIG. 7 (the setting unit 151 and/or the transmission processing unit 153) may be implemented by the radio communication interface 825. Alternatively, at least a part of the elements may be implemented by the controller 821. As an example, a module including a part (e.g., the BB processor 826) or the whole of the radio communication interface 825 and/or the controller 821 may be mounted on the eNB 800, and the single or multiple elements may be implemented by the module. In this case, the above module may store a program for causing a processor to function as the single or multiple elements (in other words, a program for causing a processor to execute the operations of the single or multiple elements) and execute the program. As another example, a program for causing a processor to function as the single or multiple elements may be installed in the eNB 800 and the radio communication interface 825 (e.g., the BB processor 826) and/or the controller 821 may execute the program. As described above, the eNB 800, the base station apparatus 820, or the above module may be provided as an apparatus including the single or multiple elements, or the program for causing a processor to function as the single or multiple elements may be provided. Alternatively, a readable recording medium having the above program recorded thereon may be provided.

Furthermore, in the eNB 800 illustrated in FIG. 33, the radio communication unit 120 described by using FIG. 7 may be implemented by the radio communication interface 825 (e.g., the RF circuit 827). Furthermore, the antenna unit 110 may be implemented by the antenna 810. The network communication unit 130 may be implemented by the controller 821 and/or the network interface 823. Furthermore, the storage unit 140 may be implemented by the memory 822.

(Second Application Example)

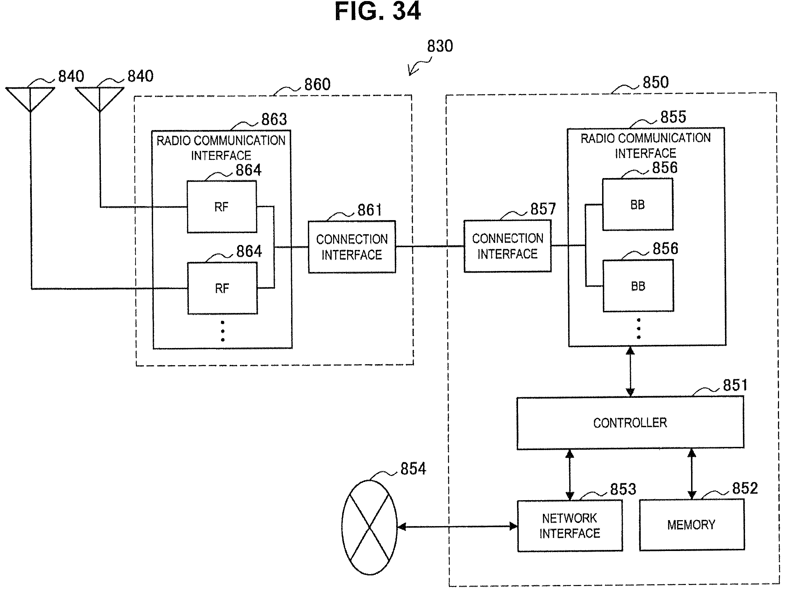

FIG. 34 is a block diagram illustrating a second example of a schematic configuration of an eNB to which the technology of an embodiment of the present disclosure may be applied. An eNB 830 includes one or more antennas 840, a base station apparatus 850, and an RRH 860. Each antenna 840 and the RRH 860 may be connected to each other via an RF cable. The base station apparatus 850 and the RRH 860 may be connected to each other via a high speed line such as an optical fiber cable.

Each of the antennas 840 includes a single or multiple antenna elements (such as multiple antenna elements included in an MIMO antenna), and is used for the RRH 860 to transmit and receive radio signals. The eNB 830 may include the multiple antennas 840, as illustrated in FIG. 34. For example, the multiple antennas 840 may be compatible with multiple frequency bands used by the eNB 830. Although FIG. 34 illustrates the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to FIG. 33.

The radio communication interface 855 supports any cellular communication scheme such as LTE and LTE-Advanced, and provides radio communication to a terminal positioned in a sector corresponding to the RRH 860 via the RRH 860 and the antenna 840. The radio communication interface 855 may typically include, for example, a BB processor 856. The BB processor 856 is the same as the BB processor 826 described with reference to FIG. 33, except the BB processor 856 is connected to the RF circuit 864 of the RRH 860 via the connection interface 857. The radio communication interface 855 may include the multiple BB processors 856, as illustrated in FIG. 34. For example, the multiple BB processors 856 may be compatible with multiple frequency bands used by the eNB 830. Although FIG. 34 illustrates the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives radio signals via the antenna 840. The radio communication interface 863 may typically include, for example, the RF circuit 864. The RF circuit 864 may include, for example, a mixer, a filter, and an amplifier, and transmits and receives radio signals via the antenna 840. The radio communication interface 863 may include multiple RF circuits 864, as illustrated in FIG. 34. For example, the multiple RF circuits 864 may support multiple antenna elements. Although FIG. 34 illustrates the example in which the radio communication interface 863 includes the multiple RF circuits 864, the radio communication interface 863 may also include a single RF circuit 864.

In the eNB 830 illustrated in FIG. 34, a single or multiple elements included in the base station 100 described by using FIG. 7 (the setting unit 151 and/or the transmission processing unit 153) may be implemented by the radio communication interface 855 and/or the radio communication interface 863. Alternatively, at least a part of the elements may be implemented by the controller 851. As an example, a module including a part (e.g., the BB processor 856) or the whole of the radio communication interface 855 and/or the controller 851 may be mounted on the eNB 830, and the single or multiple elements may be implemented by the module. In this case, the above module may store a program for causing a processor to function as the single or multiple elements (in other words, a program for causing a processor to execute the operations of the single or multiple elements) and execute the program. As another example, a program for causing a processor to function as the single or multiple elements may be installed in the eNB 830 and the radio communication interface 855 (e.g., the BB processor 856) and/or the controller 851 may execute the program. As described above, the eNB 830, the base station apparatus 850, or the above module may be provided as an apparatus including the single or multiple elements, or the program for causing a processor to function as the single or multiple elements may be provided. Alternatively, a readable recording medium having the above program recorded thereon may be provided.

Furthermore, in the eNB 830 illustrated in FIG. 34, the radio communication unit 120 described by using FIG. 7, for example, may be implemented by the radio communication interface 863 (e.g., the RF circuit 864). Furthermore, the antenna unit 110 may be implemented by the antenna 840. The network communication unit 130 may be implemented by the controller 851 and/or the network interface 853. Furthermore, the storage unit 140 may be implemented by the memory 852.

<4.2. Application Examples Regarding Terminal Apparatus>

(First Application Example)

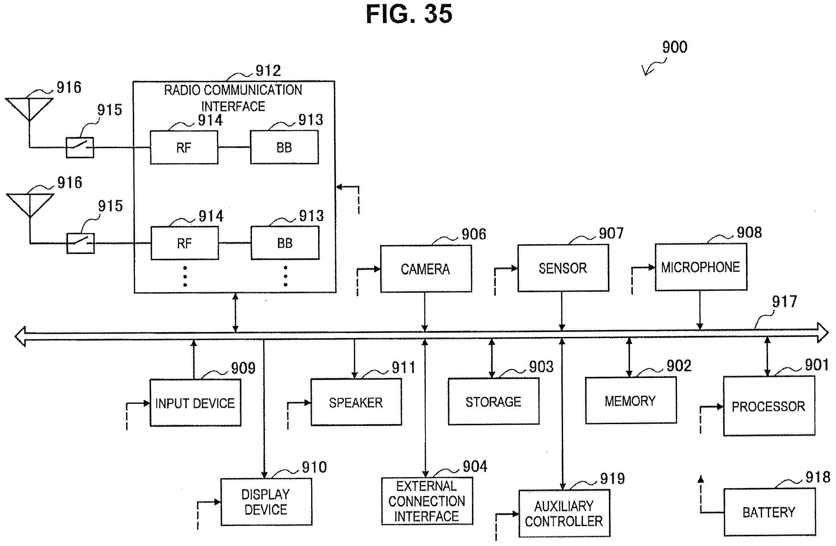

FIG. 35 is a block diagram illustrating an example of a schematic configuration of a smartphone 900 to which the technology of an embodiment of the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The radio communication interface 912 supports any cellular communication scheme such as LTE and LTE-Advanced, and performs radio communication. The radio communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for radio communication. Meanwhile, the RF circuit 914 may include, for example, a mixer, a filter, and an amplifier, and transmits and receives radio signals via the antenna 916. The radio communication interface 912 may also be a one chip module that has the BB processor 913 and the RF circuit 914 integrated thereon. The radio communication interface 912 may include the multiple BB processors 913 and the multiple RF circuits 914, as illustrated in FIG. 18. Although FIG. 18 illustrates the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of radio communication scheme such as a short-distance wireless communication scheme, a near field communication scheme, and a radio local area network (LAN) scheme. In that case, the radio communication interface 912 may include the BB processor 913 and the RF circuit 914 for each radio communication scheme.

Each of the antenna switches 915 switches connection destinations of the antennas 916 among multiple circuits (such as circuits for different radio communication schemes) included in the radio communication interface 912.

Each of the antennas 916 includes a single or multiple antenna elements (such as multiple antenna elements included in an MIMO antenna), and is used for the radio communication interface 912 to transmit and receive radio signals. The smartphone 900 may include the multiple antennas 916, as illustrated in FIG. 35. Although FIG. 35 illustrates the example in which the smartphone 900 includes the multiple antennas 916, the smartphone 900 may also include a single antenna 916.

Furthermore, the smartphone 900 may include the antenna 916 for each radio communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 illustrated in FIG. 35 via feeder lines, which are partially shown as dashed lines in the figure. The auxiliary controller 919 operates a minimum necessary function of the smartphone 900, for example, in a sleep mode.

In the smartphone 900 illustrated in FIG. 35, a single or multiple elements included in the terminal apparatus 200 described by using FIG. 8 (the reception processing unit 241) may be implemented by the radio communication interface 912. Alternatively, at least a part of the elements may be implemented by the processor 901 or the auxiliary controller 919. As an example, a module including a part (e.g., the BB processor 913) or the whole of the radio communication interface 912, the processor 901, and/or the auxiliary controller 919 may be mounted on the smartphone 900 and the single or multiple elements may be implemented by the module. In this case, the above module may store a program for causing a processor to function as the single or multiple elements (in other words, a program for causing a processor to execute the operations of the single or multiple elements) and execute the program. As another example, a program for causing a processor to function as the single or multiple elements may be installed in the smartphone 900 and the radio communication interface 912 (e.g., the BB processor 913), the processor 901, and/or the auxiliary controller 919 may execute the program. As described above, the smartphone 900 or the above module may be provided as an apparatus including the single or multiple elements, or the program for causing a processor to function as the single or multiple elements may be provided. Alternatively, a readable recording medium having the above program recorded thereon may be provided.

Furthermore, in the smartphone 900 illustrated in FIG. 35, the radio communication unit 220 described by using FIG. 8, for example, may be implemented by the radio communication interface 912 (e.g., the RF circuit 914). Furthermore, the antenna unit 210 may be implemented by the antenna 916. Furthermore, the storage unit 230 may be implemented by the memory 902.

(Second Application Example)

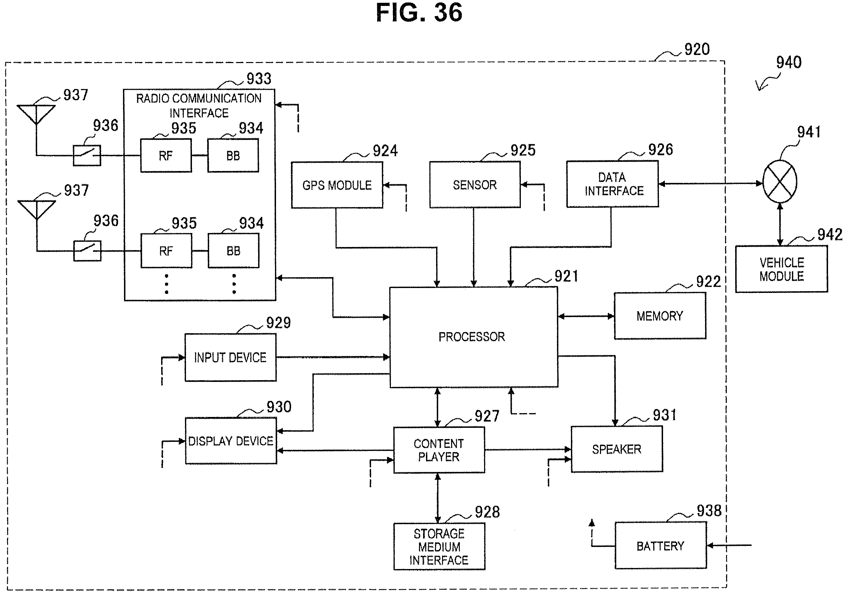

FIG. 36 is a block diagram illustrating an example of a schematic configuration of a car navigation apparatus 920 to which the technology of an embodiment of the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls a navigation function and another function of the car navigation apparatus 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation apparatus 920. The sensor 925 may include a group of sensors such as a gyro sensor, a geomagnetic sensor, and an air pressure sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sounds of the navigation function or the content that is reproduced.

The radio communication interface 933 supports any cellular communication scheme such as LET and LTE-Advanced, and performs radio communication. The radio communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for radio communication. Meanwhile, the RF circuit 935 may include, for example, a mixer, a filter, and an amplifier, and transmits and receives radio signals via the antenna 937. The radio communication interface 933 may be a one chip module having the BB processor 934 and the RF circuit 935 integrated thereon. The radio communication interface 933 may include the multiple BB processors 934 and the multiple RF circuits 935, as illustrated in FIG. 36. Although FIG. 36 illustrates the example in which the radio communication interface 933 includes the multiple BB processors 934 and the multiple RF circuits 935, the radio communication interface 933 may also include a single BB processor 934 or a single RF circuit 935.

Furthermore, in addition to a cellular communication scheme, the radio communication interface 933 may support another type of radio communication scheme such as a short-distance wireless communication scheme, a near field communication scheme, and a radio LAN scheme. In that case, the radio communication interface 933 may include the BB processor 934 and the RF circuit 935 for each radio communication scheme.

Each of the antenna switches 936 switches connection destinations of the antennas 937 among multiple circuits (such as circuits for different radio communication schemes) included in the radio communication interface 933.

Each of the antennas 937 includes a single or multiple antenna elements (such as multiple antenna elements included in an MIMO antenna), and is used for the radio communication interface 933 to transmit and receive radio signals. The car navigation apparatus 920 may include the multiple antennas 937, as illustrated in FIG. 36. Although FIG. 36 illustrates the example in which the car navigation apparatus 920 includes the multiple antennas 937, the car navigation apparatus 920 may also include a single antenna 937.

Furthermore, the car navigation apparatus 920 may include the antenna 937 for each radio communication scheme. In that case, the antenna switches 936 may be omitted from the configuration of the car navigation apparatus 920.

The battery 938 supplies power to blocks of the car navigation apparatus 920 illustrated in FIG. 36 via feeder lines that are partially shown as dashed lines in the figure. The battery 938 accumulates power supplied from the vehicle.

In the car navigation apparatus 920 illustrated in FIG. 36, a single or multiple elements included in the terminal apparatus 200 described by using FIG. 8 (the reception processing unit 241) may be implemented by the radio communication interface 933. Alternatively, at least a part of the elements may be implemented by the processor 921. As an example, a module including a part (e.g., the BB processor 934) or the whole of the radio communication interface 933 and/or the processor 921 may be mounted on the car navigation apparatus 920 and the single or multiple elements may be implemented by the module. In this case, the above module may store a program for causing a processor to function as the single or multiple elements (in other words, a program for causing a processor to execute the operations of the single or multiple elements) and execute the program. As another example, a program for causing a processor to function as the single or multiple elements may be installed in the car navigation apparatus 920 and the radio communication interface 933 (e.g., the BB processor 934) and/or the processor 921 may execute the program. As described above, the car navigation apparatus 920 or the above module may be provided as an apparatus including the single or multiple elements, or the program for causing a processor to function as the single or multiple elements may be provided. Alternatively, a readable recording medium having the above program recorded thereon may be provided.

Furthermore, in the car navigation apparatus 920 illustrated in FIG. 36, the radio communication unit 220 described by using FIG. 8, for example, may be implemented by the radio communication interface 933 (e.g., the RF circuit 935). Furthermore, the antenna unit 210 may be implemented by the antenna 937. Furthermore, the storage unit 230 may be implemented by the memory 922.

The technology of an embodiment of the present disclosure may also be realized as an in-vehicle system (or a vehicle) 940 including one or more blocks of the car navigation apparatus 920, the in-vehicle network 941, and a vehicle module 942. That is, the in-vehicle system (or a vehicle) 940 may be provided as an apparatus including the reception processing unit 241. The vehicle module 942 generates vehicle data such as vehicle speed, engine speed, and trouble information, and outputs the generated data to the in-vehicle network 941.

**EP 3 410 619 B1**

«5. Conclusion»

The embodiment of the present disclosure has been described above in detail with reference to FIGS. 1 to 36. As described above, the base station performs the transmission signal processing using the first CQI with the coding rate of each CQI index of equal to or less than the coding rate of the communication path coding. In this manner, the rate matching processing can be performed in the repeating mode, which can contribute to an improvement in the bit error rate on the reception side. Specifically, since the series including overlapping bits after the rate matching processing in the repeating mode are rearranged by the interleaver, it becomes possible to average deviations of the bit error rates in the following modulation, which leads to an improvement in the bit error rate on the reception side.

The preferred embodiment(s) of the present disclosure has/have been described above with reference to the accompanying drawings, whilst the present disclosure is not limited to the above examples. A person skilled in the art may find various alterations and modifications within the scope of the appended claims.

It may not be necessary to chronologically execute respective steps in the processing, which is executed by each device of this specification, in the order described in the sequence diagrams or the flow charts. For example, the respective steps in the processing which is executed by each device may be processed in the order different from the order described in the flow charts, and may also be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Reference Signs List

1　　　system
100　　base station, eNodeB
110　　antenna unit
120　　radio communication unit
130　　network communication unit

**Claims**

**1.** An apparatus (100) comprising

a processing unit (150) configured to perform processing of transmission signals using a first CQI table related to combinations of CQI indexes, modulation schemes, coding rates according to the LTE standard, also referred to as current coding rates, and new coding rates defined in the first CQI table,
wherein, for each CQI index of the first CQI table, a new coding rate is equal to or less than a corresponding coding rate of the same CQI index, and for each CQI index of the first CQI table, a modulation scheme is at least one of QPSK, 16-quadrature-amplitude modulation, 16QAM, and 64-quadrature-amplitude modulation, 64QAM, such that said first CQI table is defined by the following structure and content:

| CQI index | Modulation scheme | Current coding rate | New coding rate |
|---|---|---|---|
| 1 | QPSK | 0.076172 | 0.076172 |
| 2 | QPSK | 0.1172 | 0.093 |
| 3 | QPSK | 0.1885 | 0.117 |
| 4 | QPSK | 0.3008 | 0.151 |
| 5 | QPSK | 0.4385 | 0.182 |
| 6 | QPSK | 0.5879 | 0.2275 |
| 7 | 16QAM | 0.3691 | 0.13025 |
| 8 | 16QAM | 0.4785 | 0.16125 |

37

(continued)

| CQI index | Modulation scheme | Current coding rate | New coding rate |
|---|---|---|---|
| 9 | 16QAM | 0.6016 | 0.19425 |
| 10 | 64QAM | 0.4551 | 0.14255 |
| 11 | 64QAM | 0.5337 | 0.16765 |
| 12 | 64QAM | 0.6540 | 0.20215 |
| 13 | 64QAM | 0.7540 | 0.23515 |
| 14 | 64QAM | 0.8525 | 0.26725 |
| 15 | 64QAM | 0.9258 | 0.30205 |

2. The apparatus according to claim 1, wherein the processing unit (150) further comprises a rate matching unit (165) for adjusting a number of bits of a coded series in accordance with a number of transmission bits, wherein the rate matching unit (165) can be operated in a repeating mode, in which a number of bits output from the rate matching unit (165) is greater than a buffer size of the rate matching unit (165).

3. The apparatus according to claim 2, wherein the processing unit (150) is configured to apply an interleaver after the rate matching processing and before modulation.

4. The apparatus according to any one of claims 1 to 3, wherein the coding rate according to the LTE standard is 1/3.

5. The apparatus according to any one of claims 1 to 4, wherein the processing unit (150) is configured to use selectively the first CQI table or a second CQI table related to combinations of CQI indexes, modulation schemes and coding rates,
wherein the second CQI table provides further coding rates than the coding rates of the LTE standard, wherein a further coding rate of each CQI index of the second CQI table exceeds a corresponding coding rate of the LTE standard of the same CQI index.

6. The apparatus according to claim 5, wherein the new coding rate of the first CQI table is equal to or less than the further coding rate of a same CQI index in the second CQI table.

7. The apparatus according to claims 5 or 6, wherein the new coding rate of the first CQI table is equal to or less than a value obtained by dividing a coding rate of a same CQI index in the second CQI table by a number of users to be multiplexed.

8. A method comprising:

performing, by a processing unit (150), processing of transmission signals using a first CQI table related to combinations of CQI indexes, modulation schemes, coding rates according to the LTE standard, also referred to as current coding rates, and new coding rates defined in the first CQI table,
wherein, for each CQI index of the first CQI table, a new coding rate is equal to or less than a corresponding coding rate of the same CQI index, and for each CQI index of the first CQI table, a modulation scheme is at least one of quadrature phase-shift keying, QPSK, 16-quadrature-amplitude modulation, 16QAM, and 64-quadrature-amplitude modulation, 64QAM, such that said first CQI table is defined by the following structure and content:

| CQI index | Modulation scheme | Current coding rate | New coding rate |
|---|---|---|---|
| 1 | QPSK | 0.076172 | 0.076172 |
| 2 | QPSK | 0.1172 | 0.093 |
| 3 | QPSK | 0.1885 | 0.117 |
| 4 | QPSK | 0.3008 | 0.151 |

(continued)

| CQI index | Modulation scheme | Current coding rate | New coding rate |
|-----------|-------------------|---------------------|-----------------|
| 5 | QPSK | 0.4385 | 0.182 |
| 6 | QPSK | 0.5879 | 0.2275 |
| 7 | 16QAM | 0.3691 | 0.13025 |
| 8 | 16QAM | 0.4785 | 0.16125 |
| 9 | 16QAM | 0.6016 | 0.19425 |
| 10 | 64QAM | 0.4551 | 0.14255 |
| 11 | 64QAM | 0.5337 | 0.16765 |
| 12 | 64QAM | 0.6540 | 0.20215 |
| 13 | 64QAM | 0.7540 | 0.23515 |
| 14 | 64QAM | 0.8525 | 0.26725 |
| 15 | 64QAM | 0.9258 | 0.30205 |

**9.** A program comprising instructions which, when the program is executed by a computer, cause the computer to carry out the steps of the method of claim 8.

**Patentansprüche**

**1.** Vorrichtung (100), umfassend:

eine Verarbeitungseinheit (150), die dafür ausgelegt ist, Verarbeitung von Übertragungssignalen unter Verwendung einer ersten CQI-Tabelle durchzuführen, die sich auf Kombinationen von CQI-Indizes, Modulationsschemata, Kodierraten gemäß dem LTE-Standard, die auch als aktuelle Kodierraten bezeichnet werden, und neue Kodierraten bezieht, die in der ersten CQI-Tabelle definiert sind,
wobei für jeden CQI-Index der ersten CQI-Tabelle eine neue Kodierrate gleich oder kleiner als eine entsprechende Kodierrate des gleichen CQI-Index ist, und für jeden CQI-Index der ersten CQI-Tabelle ein Modulationsschema mindestens eines von QPSK, 16-Quadratur-Amplitudenmodulation, 16QAM, und 64-Quadratur-Amplitudenmodulation, 64QAM, ist, derart, dass die erste CQI-Tabelle durch die folgende Struktur und den folgenden Inhalt definiert ist:

| CQI-Index | Modulationsschema | Aktuelle Kodierrate | Neue Kodierrate |
|-----------|-------------------|---------------------|-----------------|
| 1 | QPSK | 0,076172 | 0,076172 |
| 2 | QPSK | 0,1172 | 0,093 |
| 3 | QPSK | 0,1885 | 0,117 |
| 4 | QPSK | 0,3008 | 0,151 |
| 5 | QPSK | 0,4385 | 0,182 |
| 6 | QPSK | 0,5879 | 0,2275 |
| 7 | 16QAM | 0,3691 | 0,13025 |
| 8 | 16QAM | 0,4785 | 0,16125 |
| 9 | 16QAM | 0,6016 | 0,19425 |
| 10 | 64QAM | 0,4551 | 0,14255 |
| 11 | 64QAM | 0,5337 | 0,16765 |
| 12 | 64QAM | 0,6540 | 0,20215 |

(fortgesetzt)

| CQI-Index | Modulationsschema | Aktuelle Kodierrate | Neue Kodierrate |
|---|---|---|---|
| 13 | 64QAM | 0,7540 | 0,23515 |
| 14 | 64QAM | 0,8525 | 0,26725 |
| 15 | 64QAM | 0,9258 | 0,30205 |

2. Vorrichtung nach Anspruch 1, wobei die Verarbeitungseinheit (150) ferner eine Ratenanpassungseinheit (165) zum Einstellen einer Anzahl von Bits einer kodierten Reihe entsprechend einer Anzahl von Übertragungsbits umfasst, wobei die Ratenanpassungseinheit (165) in einem Wiederholungsmodus betrieben werden kann, in dem eine Anzahl von Bits, die von der Ratenanpassungseinheit (165) ausgegeben wird, größer ist als eine Puffergröße der Ratenanpassungseinheit (165).

3. Vorrichtung nach Anspruch 2, wobei die Verarbeitungseinheit (150) dafür ausgelegt ist, nach der Ratenanpassungsverarbeitung und vor der Modulation einen Interleaver anzuwenden.

4. Vorrichtung nach einem der Ansprüche 1 bis 3, wobei die Kodierrate gemäß dem LTE-Standard 1/3 beträgt.

5. Vorrichtung nach einem der Ansprüche 1 bis 4, wobei die Verarbeitungseinheit (150) dafür ausgelegt ist, selektiv die erste CQI-Tabelle oder eine zweite CQI-Tabelle in Bezug auf Kombinationen von CQI-Indizes, Modulationsschemata und Kodierraten zu verwenden, wobei die zweite CQI-Tabelle weitere Kodierraten als die Kodierraten des LTE-Standards bereitstellt, wobei eine weitere Kodierrate jedes CQI-Index der zweiten CQI-Tabelle eine entsprechende Kodierrate des LTE-Standards des gleichen CQI-Index übersteigt.

6. Vorrichtung nach Anspruch 5, wobei die neue Kodierrate der ersten CQI-Tabelle gleich oder kleiner ist als die weitere Kodierrate eines gleichen CQI-Index in der zweiten CQI-Tabelle.

7. Vorrichtung nach Anspruch 5 oder 6, wobei die neue Kodierrate der ersten CQI-Tabelle gleich oder kleiner ist als ein Wert, der durch Division einer Kodierrate des gleichen CQI-Index in der zweiten CQI-Tabelle durch eine Anzahl von zu multiplexenden Benutzern erhalten wird.

8. Verfahren, umfassend:

Durchführen, durch eine Verarbeitungseinheit (150), von Verarbeitung von Übertragungssignalen unter Verwendung einer ersten CQI-Tabelle, die sich auf Kombinationen von CQI-Indizes, Modulationsschemata, Kodierraten gemäß dem LTE-Standard, die auch als aktuelle Kodierraten bezeichnet werden, und neue Kodierraten bezieht, die in der ersten CQI-Tabelle definiert sind, wobei für jeden CQI-Index der ersten CQI-Tabelle eine neue Kodierrate gleich oder kleiner als eine entsprechende Kodierrate des gleichen CQI-Index ist und für jeden CQI-Index der ersten CQI-Tabelle ein Modulationsschema mindestens eines von Quadratur-Phasenumtastung, QPSK, 16-Quadratur-Amplitudenmodulation, 16QAM, und 64-Quadratur-Amplitudenmodulation, 64QAM, ist, derart, dass die erste CQI-Tabelle durch die folgende Struktur und den folgenden Inhalt definiert ist:

| CQI-Index | Modulationsschema | Aktuelle Kodierrate | Neue Kodierrate |
|---|---|---|---|
| 1 | QPSK | 0,076172 | 0,076172 |
| 2 | QPSK | 0,1172 | 0,093 |
| 3 | QPSK | 0,1885 | 0,117 |
| 4 | QPSK | 0,3008 | 0,151 |
| 5 | QPSK | 0,4385 | 0,182 |
| 6 | QPSK | 0,5879 | 0,2275 |

(fortgesetzt)

| CQI-Index | Modulationsschema | Aktuelle Kodierrate | Neue Kodierrate |
|---|---|---|---|
| 7 | 16QAM | 0,3691 | 0,13025 |
| 8 | 16QAM | 0,4785 | 0,16125 |
| 9 | 16QAM | 0,6016 | 0,19425 |
| 10 | 64QAM | 0,4551 | 0,14255 |
| 11 | 64QAM | 0,5337 | 0,16765 |
| 12 | 64QAM | 0,6540 | 0,20215 |
| 13 | 64QAM | 0,7540 | 0,23515 |
| 14 | 64QAM | 0,8525 | 0,26725 |
| 15 | 64QAM | 0,9258 | 0,30205 |

**9.** Programm, umfassend Anweisungen, die bei Ausführung des Programms durch einen Computer den Computer veranlassen, die Schritte des Verfahrens nach Anspruch 8 durchzuführen.

**Revendications**

**1.** Appareil (100) comprenant :

une unité de traitement (150) configurée pour exécuter un traitement de signaux de transmission en utilisant une première table CQI liée à des combinaisons d'indices CQI, à des schémas de modulation, à des taux de codage selon la norme LTE, également appelés taux de codage courants, et à de nouveaux taux de codage définis dans la première table CQI,

où, pour chaque indice CQI de la première table CQI, un nouveau taux de codage est égal ou inférieur à un taux de codage correspondant du même indice CQI et, pour chaque indice CQI de la première table CQI, un schéma de modulation est au moins l'une parmi une modulation QPSK, une modulation d'amplitude en quadrature 16, 16QAM, et une modulation d'amplitude en quadrature 64, 64QAM, de sorte que ladite première table CQI est définie par la structure et le contenu suivants :

| Indice CQI | Schéma de modulation | Taux de codage courant | Nouveau taux de codage |
|---|---|---|---|
| 1 | QPSK | 0,076172 | 0,076172 |
| 2 | QPSK | 0,1172 | 0,093 |
| 3 | QPSK | 0,1885 | 0,117 |
| 4 | QPSK | 0,3008 | 0,151 |
| 5 | QPSK | 0,4385 | 0,182 |
| 6 | 16QAM | 0,5879 | 0,2275 |
| 7 | 16QAM | 0,3691 | 0,13025 |
| 8 | 16QAM | 0,4785 | 0,16125 |
| 9 | 16QAM | 0,6016 | 0,19425 |
| 10 | 64QAM | 0,4551 | 0,14255 |
| 11 | 64QAM | 0,5337 | 0,16765 |
| 12 | 64QAM | 0,6540 | 0,20215 |
| 13 | 64QAM | 0,7540 | 0,23515 |
| 14 | 64QAM | 0,8525 | 0,26725 |

(suite)

| Indice CQI | Schéma de modulation | Taux de codage courant | Nouveau taux de codage |
|---|---|---|---|
| 15 | 64QAM | 0,9258 | 0,30205 |

**2.** Appareil selon la revendication 1, dans lequel l'unité de traitement (150) comprend en outre une unité d'adaptation de débit (165) pour ajuster un nombre de bits d'une série codée en fonction d'un nombre de bits de transmission, où l'unité d'adaptation de débit (165) peut fonctionner dans un mode répétitif, où un nombre de bits délivrés en sortie par l'unité d'adaptation de débit (165) est supérieur à une taille de tampon de l'unité d'adaptation de débit (165).

**3.** Appareil selon la revendication 2, dans lequel l'unité de traitement (150) est configurée pour appliquer un entrelaceur après le traitement d'adaptation de débit et avant la modulation.

**4.** Appareil selon l'une quelconque des revendications 1 à 3, dans lequel le taux de codage selon la norme LTE est de 1/3.

**5.** Appareil selon l'une quelconque des revendications 1 à 4, dans lequel l'unité de traitement (150) est configurée pour utiliser sélectivement la première table CQI ou une deuxième table CQI liée à des combinaisons d'indices CQI, des schémas de modulation et des taux de codage,
où la deuxième table CQI fournit d'autres taux de codage que les taux de codage de la norme LTE, où un autre taux de codage de chaque indice CQI de la deuxième table CQI dépasse un taux de codage correspondant de la norme LTE du même indice CQI.

**6.** Appareil selon la revendication 5, dans lequel le nouveau taux de codage de la première table CQI est égal ou inférieur au taux de codage supplémentaire d'un même indice CQI dans la deuxième table CQI.

**7.** Appareil selon les revendications 5 ou 6, dans lequel le nouveau taux de codage de la première table CQI est égal ou inférieur à une valeur obtenue en divisant un taux de codage d'un même indice CQI dans la deuxième table CQI par un nombre d'utilisateurs à multiplexer.

**8.** Procédé comprenant les étapes suivantes :

exécuter, par une unité de traitement (150), un traitement de signaux de transmission en utilisant une première table CQI liée à des combinaisons d'indices CQI, à des schémas de modulation, à des taux de codage selon la norme LTE, également appelés taux de codage courants, et à de nouveaux taux de codage définis dans la première table CQI,
où, pour chaque indice CQI de la première table CQI, un nouveau taux de codage est égal ou inférieur à un taux de codage correspondant du même indice CQI et, pour chaque indice CQI de la première table CQI, un schéma de modulation est au moins l'une parmi une modulation par déplacement de phase en quadrature, QPSK, une modulation d'amplitude en quadrature 16, 16QAM, et une modulation d'amplitude en quadrature 64, 64QAM, de sorte que ladite première table CQI est définie par la structure et le contenu suivants :

| Indice CQI | Schéma de modulation | Taux de codage courant | Nouveau taux de codage |
|---|---|---|---|
| 1 | QPSK | 0,076172 | 0,076172 |
| 2 | QPSK | 0,1172 | 0,093 |
| 3 | QPSK | 0,1885 | 0,117 |
| 4 | QPSK | 0,3008 | 0,151 |
| 5 | QPSK | 0,4385 | 0,182 |
| 6 | 16QAM | 0,5879 | 0,2275 |
| 7 | 16QAM | 0,3691 | 0,13025 |
| 8 | 16QAM | 0,4785 | 0,16125 |
| 9 | 16QAM | 0,6016 | 0,19425 |

(suite)

| Indice CQI | Schéma de modulation | Taux de codage courant | Nouveau taux de codage |
|---|---|---|---|
| 10 | 64QAM | 0,4551 | 0,14255 |
| 11 | 64QAM | 0,5337 | 0,16765 |
| 12 | 64QAM | 0,6540 | 0,20215 |
| 13 | 64QAM | 0,7540 | 0,23515 |
| 14 | 64QAM | 0,8525 | 0,26725 |
| 15 | 64QAM | 0,9258 | 0,30205 |

**9.** Programme comprenant des instructions qui, lorsque le programme est exécuté par un ordinateur, amènent l'ordinateur à exécuter les étapes du procédé de la revendication 8.

# FIG. 1

# FIG. 2

EP 3 410 619 B1

**FIG. 3**

**FIG. 4**

EP 3 410 619 B1

FIG. 5

## FIG. 6

EP 3 410 619 B1

# FIG. 7

# FIG. 8

# FIG. 9

153

| 161 | 162 | 163 | 164 | 165 | 166 |
|---|---|---|---|---|---|
| TB GENERATION UNIT | CRC CALCULATION UNIT | CB DIVISION UNIT | CHANNEL CODING UNIT | RATE MATCHING UNIT | INTERLEAVER |
| TB GENERATION UNIT | CRC CALCULATION UNIT | CB DIVISION UNIT | CHANNEL CODING UNIT | RATE MATCHING UNIT | INTERLEAVER |

167  MODULATION UNIT

167  MODULATION UNIT

168  LAYER MAPPING UNIT

169  PRECODING UNIT

170  RESOURCE ELEMENT MAPPING UNIT

171  OFDM SIGNAL GENERATION UNIT

EP 3 410 619 B1

# FIG. 10

| | |
|---|---|
| Turbo coding (1/3) | Uplink Shared Channel (ULSCH) |
| | Downlink Shared Channel (DLSCH) |
| | Paging Channel (PCH) |
| | Multicast Channel (MCH) |

| | |
|---|---|
| Tail biting convolutional coding (1/3) | Broadcast Channel (BCH) |
| | Downlink Control Indicator (DCI) |
| Block code (variable) | Uplink Control Indicator (UCI) |

| | |
|---|---|
| Block code (1/336) | Control Format Indicator (CFI) |

| | |
|---|---|
| Repetition code (1/3) | Hybrid ARQ Indicator (HI) |

## FIG. 11

INPUT BIT STREAM

164

1641 FIRST ENCODER

1642 INTERLEAVER

1643 SECOND ENCODER

SYSTEMATIC BIT STREAM

FIRST PARITY BIT STREAM

SECOND PARITY BIT STREAM

FIG. 12

EP 3 410 619 B1

FIG. 13

# FIG. 14

RADIO FRAME

SUB FRAME

TIME SLOT

7 OFDM SYMBOL

RESOURCE BLOCK

RESOURCE ELEMENT

12 SUBCARRIER

FIG. 15

EP 3 410 619 B1

**FIG. 16**

EP 3 410 619 B1

# FIG. 17

EP 3 410 619 B1

# FIG. 18

EP 3 410 619 B1

# FIG. 19

Im

1011   1001       0001   0011

1010   1000       0000   0010

Re

1110   1100       0100   0110

1111   1101       0101   0111

1st bit 1 region       1st bit 0 region

# FIG. 20

Im

2nd bit 0 region

1011   1001   0001   0011

1010   1000   0000   0010

Re

1110   1100   0100   0110

1111   1101   0101   0111

2nd bit 1 region

# FIG. 21

# FIG. 22

# FIG. 23

<1st bit>

<2nd bit>

<3rd bit>

<4th bit>

EP 3 410 619 B1

## FIG. 24

EP 3 410 619 B1

# FIG. 25

## FIG. 26

## FIG. 27

# FIG. 28

```
        ┌─────────────┐
        │    START    │
        └─────────────┘
               │
               ▼
┌───────────────────────────────────┐
│    ERROR CORRECTION CODING        │───S102
└───────────────────────────────────┘
               │
               ▼
┌───────────────────────────────────┐
│      DECIDE ENCODING RATE         │───S104
└───────────────────────────────────┘
               │
               ▼
┌───────────────────────────────────┐
│ PERFORM RATE MATCHING PROCESSING IN│───S106
│          REPEATING MODE           │
└───────────────────────────────────┘
               │
               ▼
┌───────────────────────────────────┐
│       APPLY INTERLEAVER           │───S108
└───────────────────────────────────┘
               │
               ▼
┌───────────────────────────────────┐
│          MODULATE                 │───S110
└───────────────────────────────────┘
               │
               ▼
┌───────────────────────────────────┐
│       TRANSMIT SIGNAL             │───S112
└───────────────────────────────────┘
               │
               ▼
        ┌─────────────┐
        │    END      │
        └─────────────┘
```

# FIG. 29

# FIG. 30

## FIG. 31

START

REFER TO SIZE OF RADIO RESOURCE UTILIZED TO TRANSMIT TARGET DATA —S402

REFER TO INDEX RELATED TO MODULATION LEVEL OR CODING RATE APPLIED TO TARGET DATA —S404

DECIDE REFERENCE DATA SIZE —S406

S408

DOES TRANSMISSION RELATED INFORMATION SATISFY PREDETERMINED CONDITIONS?

NO

YES

S410

DECIDE DATA SIZE CHANGED FROM REFERENCE DATA SIZE ON BASIS OF TRANSMISSION RELATED INFORMATION

S412

DECIDE REFERENCE DATA SIZE WITH NO CHANGE, AS DATA SIZE

END

# FIG. 32

START

REFER TO SIZE OF RADIO RESOURCE
UTILIZED TO TRANSMIT TARGET DATA — S502

REFER TO INDEX RELATED TO MODULATION
LEVEL OR CODING RATE APPLIED TO TARGET
DATA — S504

REFER TO TRANSMISSION RELATED
INFORMATION — S506

DECIDE DATA SIZE ON BASIS OF TBS TABLE
SELECTED IN ACCORDANCE WITH REFERENCE
RESULT — S508

END

# FIG. 33

# FIG. 34

# FIG. 35

FIG. 36

940

941

942 VEHICLE MODULE

920

926 DATA INTERFACE

922 MEMORY

925 SENSOR

921 PROCESSOR

924 GPS MODULE

931 SPEAKER

938 BATTERY

927 CONTENT PLAYER

928 STORAGE MEDIUM INTERFACE

933 RADIO COMMUNICATION INTERFACE

934 BB

935 RF

934 BB

935 RF

936

937

936

937

929 INPUT DEVICE

930 DISPLAY DEVICE

## REFERENCES CITED IN THE DESCRIPTION

### Patent documents cited in the description

- JP 2004194288 A
- WO 2014167883 A
- JP 2014052330 W

### Non-patent literature cited in the description

- **LG ELECTRONICS.** Discussion about UCI transmission enhancement. *3GPP DRAFT; R1-112482-LGUCI TRANSMISSION ENHANCEMENT(FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 16 August 2011, vol. RAN WG1

- **INTEL CORPORATION.** CQI/MCS/TBS Tables for 256QAM and Relevant Signaling. *3GPP DRAFT; R1-140118 INTEL - 256QAM_TABLES_SIGNALING - COPY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 10 February 2014, vol. RAN WG1, ht-tp://www.3gpp.org/ftp/Meetings_3GPP_SYNC/RAN /RANI/Docs